(19) Europäisches Patentamt
European Patent Office
Office européen des brevets

(11) EP 4 763 909 A2

(12) EUROPEAN PATENT APPLICATION

(43) Date of publication:
24.06.2026 Bulletin 2026/26

(21) Application number: 25219819.7

(22) Date of filing: 01.12.2025

(51) International Patent Classification (IPC):
*C08L 7/00* (2006.01) *C08L 23/22* (2025.01)

(52) Cooperative Patent Classification (CPC):
(C-Sets available)
C08L 23/22; C08L 7/00 (Cont.)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH LA MA MD TN

(30) Priority: 18.12.2024 JP 2024221931

(71) Applicant: Sumitomo Rubber Industries, Ltd.
Kobe-shi, Hyogo 651-0072 (JP)

(72) Inventors:
- YOSHIZAWA, Ryota
Kobe-shi, 651-0072 (JP)
- MATSUMOTO, Norihiro
Kobe-shi, 651-0072 (JP)
- UCHIDA, Mamoru
Kobe-shi, 651-0072 (JP)

(74) Representative: Manitz Finsterwald
Patent- und Rechtsanwaltspartnerschaft mbB
Martin-Greif-Straße 1
80336 München (DE)

# (54) TIRE

(57) Provided is a tire comprising a belt, and an internal member arranged on the inner side of the belt in a tire radial direction, the belt comprising at least one belt ply that has a metal cord and a topping rubber covering the metal cord, wherein A is 0.03 parts by mass or less, where A represents a cobalt content, in parts by mass, based on 100 parts by mass of a rubber component in a rubber composition constituting the topping rubber, wherein the internal member is composed of a rubber composition comprising a water permeation-suppressing filler, and wherein A and B satisfy the following inequality (1),

$$(1)\ B/(A+5) > 1,$$

where B represents a content, in parts by mass, of the water permeation-suppressing filler based on 100 parts by mass of a rubber component in the rubber composition constituting the internal member.

EP 4 763 909 A2

(52) Cooperative Patent Classification (CPC): (Cont.)

C-Sets
**C08L 7/00, C08L 91/00, C08K 3/04, C08K 5/098, C08K 5/3415, C08K 5/09, C08K 3/22, C08K 3/06, C08K 5/3437;**
**C08L 23/22, C08L 91/00, C08L 61/06, C08L 25/16, C08K 3/04, C08K 3/34, C08K 5/09, C08K 3/22, C08K 3/06, C08K 5/47**

## Description

TECHNICAL FIELD

The present invention relates to a tire.

BACKGROUND OF THE INVENTION

As one of damages of a reinforcing layer such as a belt and the like in a tire, there is peeling of a reinforcing layer due to destruction of an adhesion layer of a topping rubber to a cord in the reinforcing layer. As a mechanism of destruction of an adhesion layer, hydrolysis of an adhesion layer due to intrusion of water into the adhesion layer, promotion of generation of an adhesion layer destruction-causing substance such as zinc sulfide, copper sulfide, or the like, and the like have been known. In order to enhance adhesion performance of an adhesion layer, a method of compounding a cobalt compound into a topping rubber has been widely used. However, cobalt resources are highly unevenly distributed and have a potential geopolitical risk. Moreover, environmental regulation for cobalt tends to become strict. Therefore, improving adhesion performance of a reinforcing layer while suppressing the use of cobalt compounds has been considered (for example, JP 2024-128932 A).

SUMMARY OF THE INVENTION

According to the present invention, provided is a tire for which peeling of a belt due to permeation of water from the inside of a tire is suppressed.

That is, the present invention relates to the following tire:

a tire comprising a belt, and an internal member arranged on the inner side of the belt in a tire radial direction,
the belt comprising at least one belt ply that has a metal cord and a topping rubber covering the metal cord,
wherein A is 0.03 parts by mass or less, where A represents a cobalt content, in parts by mass, based on 100 parts by mass of a rubber component in a rubber composition constituting the topping rubber,
wherein the internal member is composed of a rubber composition comprising a water permeation-suppressing filler, and
wherein A and B satisfy the following inequality (1),

$$(1)\ B/(A+5) > 1,$$

where B represents a content, in parts by mass, of the water permeation-suppressing filler based on 100 parts by mass of a rubber component in the rubber composition constituting the internal member.

According to the present invention, in a tire, peeling of a belt due to permeation of water from the inside of the tire can be suppressed.

BRIEF DESCRIPTION OF THE DRAWINGS

FIG. 1 is a cross-sectional view of a tire relating to one embodiment of the present invention, which passes through a tire rotation axis.

DETAILED DESCRIPTION

A tire that is one embodiment of the present invention will be described below. The tire of the present embodiment is a tire comprising a belt, and an internal member arranged on the inner side of the belt in a tire radial direction, the belt comprising at least one belt ply that has a metal cord and a topping rubber covering the metal cord, wherein A is 0.03 parts by mass or less, where A represents a cobalt content, in parts by mass, based on 100 parts by mass of a rubber component in a rubber composition constituting the topping rubber, wherein the internal member is composed of a rubber composition comprising a water permeation-suppressing filler, and wherein A and B satisfy the following inequality (1),

$$(1)\ B/(A+5) > 1,$$

where B represents a content, in parts by mass, of the water permeation-suppressing filler based on 100 parts by mass of a rubber component in the rubber composition constituting the internal member.

Although it is not intended to be bound by a theory, in the present invention, the following can be considered as a mechanism by which peeling of a belt is suppressed. It is said that water mainly intrudes from the inside of a tire, so when a water permeation-suppressing filler is compounded in the inner member of the tire, it is considered that intrusion of water from a tire inner surface into the belt is suppressed. Moreover, when an amount of cobalt in the rubber composition constituting the topping rubber is decreased, adhesion performance for the metal cord and the topping rubber is deteriorated. Therefore, in order to maintain and improve adhesion performance, a content of the water permeation-suppressing filler and a cobalt amount are adjusted to satisfy a predetermined relational expression. It is considered that, with cooperation of these features, peeling of the belt is suppressed.

The right side of the inequality (1) is preferably 3, more preferably 5.

This is because the inequality (1) is satisfied under a stricter condition.

When T represents a thickness, in mm, of the belt and L represents a thickness, in mm, of the internal member, T, L, and B preferably satisfy the following inequality (2),

$$(2)\ T \times L \times B > 10.$$

(2)

When the thickness of the belt increases, a distance from the inside of the tire to the metal cord and the topping rubber increases, and water becomes less likely to reach an adhesion layer for the metal cord and the topping rubber. Moreover, when the thickness of the inner member increases, the distance from the inside of the tire to the metal cord and the topping rubber increases as well, and water becomes less likely to reach the adhesion layer. Furthermore, when the content of the water permeation-suppressing filler is increased, intrusion of water from the tire inner surface into the belt is suppressed. Therefore, when T, L, and B are adjusted to satisfy the inequality (2), it is considered that adhesion performance is maintained and improved.

The right side of the inequality (2) is preferably 20.

This is because the inequality (2) is satisfied under a stricter condition.

The rubber composition constituting the internal member preferably comprises a rubber component comprising a butyl-based rubber.

A butyl-based rubber has high suppressibility for water permeation. When a butyl-based rubber is compounded in the internal member of the tire, it is considered that intrusion of water from the tire inner surface into the belt is suppressed.

The rubber composition constituting the topping rubber preferably comprises a rubber component comprising an isoprene-based rubber.

Since an isoprene-based rubber is a rubber having high tear strength and high mechanical strength, strength of a belt topping rubber is increased by using an isoprene-based rubber, and it is considered that strength and flexibility of the belt itself are improved.

It is preferable that the rubber composition constituting the internal member comprises a butyl-based rubber and a water permeation-suppressing filler, where a content of the butyl-based rubber is 70% by mass or more and 100% by mass or less in 100% by mass of the rubber component, and where a content of the water permeation-suppressing filler is 10 parts by mass or more and 70 parts by mass or less based on 100 parts by mass of the rubber component.

When the contents of the butyl-based rubber and the water permeation-suppressing filler are within the above-described ranges in the rubber composition constituting the internal member, it is considered that intrusion of water into the belt can be effectively suppressed.

It is preferable that the rubber composition constituting the topping rubber comprises an isoprene-based rubber whose content is 80% by mass or more and 100% by mass or less in 100% by mass of the rubber component and that A is 0.02 parts by mass or less.

When the contents of the isoprene-based rubber and cobalt are within the above-described ranges in the rubber composition constituting the topping rubber, it is considered that adhesion performance for the metal cord and the topping rubber is maintained and improved.

When C represents a content, in parts by mass, of carbon black based on 100 parts by mass of the rubber component in the rubber composition constituting the internal member, B, C, and L preferably satisfy the following inequality (3),

$$(3)\ B/(B+C) \times L < 1.$$

In the internal member composed of the rubber composition satisfying the inequality (3), it is considered that the

content of the water permeation-suppressing filler, the content of the butyl-based rubber, and the thickness of the internal member are properly adjusted from the viewpoint of suppression of water permeation.

It is preferable that the rubber composition constituting the topping rubber comprises a bismaleimide compound and that, when E represents a content, in parts by mass, of the bismaleimide compound based on 100 parts by mass of the rubber component, A, E, and T satisfy the following inequality (4),

$$(4)\ (A+E)/T > 1.$$

In the topping rubber composed of the rubber composition satisfying the inequality (4), it is considered that adhesion performance for the metal cord and the topping rubber is further enhanced.

The water permeation-suppressing filler preferably comprises at least one selected from the group consisting of kaolinite, dickite, nacrite, halloysite, chrysotile, lizardite, antigorite, pyrophyllite, talc, kerolite, williamsite, pimelite, minnesotaite, mica, chlorite, smectite, vermiculite, saponite, hectorite, stevensite, montmorillonite, beidellite, nontronite, boehmite, hydrotalcite, recovered carbon black, and a rubber powder.

When the rubber composition constituting the internal member comprises a water permeation-suppressing filler selected from the above, it is considered that water permeation suppressibility of the rubber composition constituting the internal member is further improved.

The metal cord preferably comprises a steel cord having a plating layer of binary plating of copper and zinc, ternary plating of copper, zinc, and cobalt, or ternary plating of copper, zinc, and iron.

In a belt ply comprising a steel cord having such a plating layer, adhesiveness between the cord and the topping rubber is improved, and it is considered that peeling of the belt is suppressed.

<Definition>

A "standardized state" is a state in which a tire is rim-assembled to a standardized rim, filled with air at a standardized internal pressure, and applied with no load. Unless otherwise noted, a tire in a standardized state is used.

A "dimension of each part of a tire" is a value specified in a standardized state for one appearing on the outer surface of the tire, unless otherwise specified, while it is a value specified, for example, in a condition where the tire is cut on a plane including a tire rotation axis and the cut tire piece is held with a rim width of a standardized rim, for one present inside the tire or on a tire cutting surface.

A "standardized rim" is a rim, in a standard system including a standard on which the tire is based, defined for each tire by the standard. For example, the "standardized rim" refers to a standard rim of an applicable size described in "JATMA YEAR BOOK" in JATMA (The Japan Automobile Tyre Manufacturers Association, Inc.), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.), to which references are made in this order, and if there is an applicable size at the time of the reference, the rim conforms to its standard. Besides, in a case of a tire that is not defined by the standard, the "standardized rim" shall refer to a rim having the narrowest rim width among rims that can be rim-assembled to the tire, that can maintain an internal pressure (that is, do not cause air leakage between the rim and the tire), and that have the smallest rim diameter.

A "standardized internal pressure" is an air pressure, in a standard system including a standard on which the tire is based, defined for each tire by the standard, and, for example, it refers to a "MAXIMUM AIR PRESSURE" in JATMA, "INFLATION PRESSURE" in ETRTO, or a maximum value described in Table "TIRE LOAD LIMITS AT VARIOUS COLD INFLATION PRESSURES" in TRA, to which references are made in this order as in the case of the standardized rim, and if there is an applicable size at the time of the reference, the standardized internal pressure conforms to its standard. Besides, in the case of tires that are not defined by the standard, the standardized internal pressure shall refer to a standardized internal pressure (250 kPa or more) of another tire size (specified in the standard) for which the standardized rim is described as a standard rim, and when a plurality of standardized internal pressures of 250 kPa or more are described, it shall refer to the minimum value among them.

A "standardized load, in kg" is a load, in a standard system including a standard on which the tire is based, defined for each tire by the standard, for example, a "MAXIMUM LOAD CAPACITY" in JATMA, a "LOAD CAPACITY" in ETRTO, or a maximum value described in Table "TIRE LOAD LIMITS AT VARIOUS COLD INFLATION PRESSURES" in TRA, to which references are made in this order as in cases of a standardized rim and a standardized internal pressure, and if there is an applicable size at the time of the reference, the load conforms to its standard. Then, in the case of tires that are not defined by the standard, a maximum load capacity $W_L$ obtained by a calculation is defined as a standardized load.

A "maximum load capacity $W_L$, in kg" is calculated by the following equation. "V" represents a virtual volume, in $mm^3$, of a tire, "Dt" represents a tire outer diameter, in mm, in a standardized state, "Ht" represents a cross-sectional height, in mm, of the tire in a tire radial direction on a cross section of the tire taken along a plane including a tire rotation axis, and

"Wt" represents a cross-sectional width, in mm, of the tire in the standardized state. When R represents a rim diameter of the tire, Ht can be calculated by the following equation: (Dt-R)/2. Wt is a value obtained by excluding, if any, patterns, letters, or the like on the side surface of the tire. Besides, the maximum load capacity has the same meaning as a standardized load described above.

$$W_L = 0.000011 \times V + 175$$

$$V = \{(Dt/2)^2 - (Dt/2 - Ht)^2\} \times \pi \times Wt$$

A "belt" is a layer provided on the outer side in a tire radial direction with respect to a carcass and is composed of at least one belt ply comprising a plurality of metal cords and a topping rubber covering the metal cords. The plurality of metal cords constituting the belt ply are arranged to approximately parallel one another. Moreover, a plurality of working layers in which inside metal cords are inclined at about 18 to 30° with respect to a tire circumferential direction and which overlap with one another in opposite directions, a circumferential belt layer in which inside metal cords are oriented at an angle of ±10° with respect to a tire circumferential direction, and the like are applicable to the belt.

A "internal member" is a tire member provided on the inner side in a tire radial direction with respect to a belt. Specifically, examples of the internal member include an inner liner forming a tire inner surface, an insulation provided between a carcass and an inner liner on the outer side of the inner liner in the tire radial direction (the insulation being also referred to as a "tie gum"), and the like.

A "thickness of a belt", a "thickness of an internal member", a "thickness of an inner liner", and a "thickness of an insulation" are each a thickness in a tire radial direction per one layer of each member on a tire equator on a cross section of a tire taken along a plane including a tire rotation axis. In a case where these members are not present on the equatorial plane, each of the thicknesses of these members is a thickness in the tire radial direction per one layer of each of these members at a middle position in a tire width direction of each of these members.

A "filament" refers to a minimum unit forming a steel cord. One formed by twisting together a plurality of such filaments is referred to as a "yarn".

A "rubber component of a rubber composition" refers to a component contributing to crosslinking in the rubber composition and is generally a component having a weight-average molecular weight (Mw) of 10,000 or more, and rubber components that are in a liquid state at 25°C are excluded from such rubber components.

A "plasticizing agent" is a material giving a rubber component plasticity and is a component extracted from a rubber composition using acetone. Moreover, examples of the plasticizing agent include a plasticizing agent that is liquid (in a liquid state) at 25°C and a plasticizing agent that is solid at 25°C. However, the plasticizing agent shall not include wax and stearic acid commonly used in the tire industry.

A "content of a plasticizing agent" also includes an amount of a plasticizing agent that is contained in a rubber component extended by the plasticizing agent.

<Measuring method>

For a "thickness of an inner liner", a "thickness of an insulation", a "thickness of a belt", and a "thickness of an internal member", an average value of respective values measured on tire cross sections along the plane including a tire rotation axis at five sites where a tire is rotated in 72 degree increments is used. Besides, the measurement can be performed by preparing a cross-sectional piece of the tire cut along the plane including the tire rotation axis and holding it with a space between its beads adjusted to match a width of a standardized rim.

A "styrene content" is calculated by pyrolysis gas chromatography or NMR measurement ($^1$H-NMR or $^{13}$C-NMR). For a component amount such as a "styrene content", there is a true value that does not depend on any measuring methods, unlike physical property values such as a complex elastic modulus (E*) and the like. Therefore, it is preferable to use a measuring method that is as highly accurate as possible. Besides, in the present specification, "pyrolysis gas chromatography" refers to a method of heating a sample by a pyrolysis device, separating individual components contained in a gas-phase component generated by this heating from one another using a separation column, and analyzing each isolated component.

A "vinyl content (1,2-bond butadiene unit amount)" is calculated by pyrolysis gas chromatography or NMR measurement ($^1$H-NMR or $^{13}$C-NMR). Also for a "vinyl content", there is a true value that does not depend on any measuring methods, like a "styrene content". Therefore, it is preferable to use a measuring method that is as highly accurate as possible.

A "cis content (cis-1,4-bond butadiene unit amount)" is a value measured by infrared absorption spectrometry in accordance with JIS K 6239-2:2017 or NMR measurement ($^1$H-NMR or $^{13}$C-NMR) and is applied to a rubber component having a repeating unit derived from butadiene such as, for example, a BR and the like. Also for a "cis content", there is a

true value that does not depend on any measuring methods, like a "styrene content". Therefore, it is preferable to use a measuring method that is as highly accurate as possible.

A "weight-average molecular weight (Mw)" can be calculated in terms of a standard polystyrene based on measurement values obtained by a gel permeation chromatography (GPC) (for example, GPC-8000 Series manufactured by Tosoh Corporation, detector: differential refractometer, column: TSKgel (Registered Trademark) SuperMultiporeHZ-M manufactured by Tosoh Corporation). For example, it is applied to an SBR, a BR, a plasticizing agent, and the like.

A "nitrogen adsorption specific surface area ($N_2SA$) of carbon black" is measured according to JIS K 6217-2:2017.

A "nitrogen adsorption specific surface area ($N_2SA$) of silica" is measured by a BET method according to ASTM D3037-93.

An "average primary particle size" is values calculated by an arithmetic mean of particle sizes of 400 particles which are photographed with a transmission or scanning electron microscope. In a case where the particle is in a spherical shape, a diameter of the sphere is defined as a particle size, and in cases of shapes other than the spherical shape, an equivalent circle diameter (positive square root of $\{4\times(\text{area of particle})/\pi\}$) calculated from a microscope image is defined as a particle size.

A "softening point of a resin component" is a temperature at which a sphere drops when the softening point specified in JIS K 6220-1:2015 7.7 is measured with a ring and ball softening point measuring device.

An embodiment will be described below in further detail. However, the following descriptions are illustrative for explaining the present invention, and the present invention is not limited to the content of these descriptions. Moreover, although the embodiment will be described by appropriately using the drawings, the drawings are merely illustrative.

<Tire>

FIG. 1 is a schematic view showing a part of a cross section of the tire relating to one embodiment of the present invention taken along a tire meridian line (the upper right-side part of the cross section). A tire 1 in FIG .1 comprises a cap tread 2 comprising a tread surface, a base tread 3, a band 4, a belt 5, a carcass 6, an insulation 7, and an inner liner 8. The inner liner 8 constitutes an inner surface of the tire and retains an internal pressure in the tire. The insulation 7 is adjacent to the outer side of the inner liner 8 in a tire radial direction, and the inner liner 8 is bonded to another member such as the carcass 6 or the like via the insulation 7. A thickness of the inner liner 8 along a tire center line is denoted by L1. A thickness of the belt 5 along the tire center line is denoted by T.

In FIG. 1, the belt 5 is composed of one belt ply comprising a plurality of metal cords and a topping rubber covering the metal cords. Although the belt 5 may be composed of a plurality of belt plies, the belt 5 is preferably composed of a smaller number of belt plies from the viewpoint of a reduction of a tire weight.

The metal cord may be a single monofilament cord (that is, a cord having a 1×1 structure and consisting of one filament) or may have a plurality of filaments. In a case where one metal cord has a plurality of filaments, the metal cord preferably has a twist structure in which these filaments are twisted together along their longitudinal direction. The twist structure is not particularly limited, and can be, for example, a single-twist metal cord having a 1×N structure or a layer-twist metal cord having a K+M structure. Although the metal cord may be straight one, the metal cord may be one shaped into a wavy or zigzag shape.

The metal cord is not particularly limited, examples of which include wire rods made of, for example, steel, stainless steel, lead, aluminum, copper, brass, bronze, nickel, zinc, or the like. A steel cord is preferable. Moreover, the metal cord preferably comprises a plating layer prepared on its surface by a conventional method. Plating is not particularly limited, examples of which include, for example, zinc plating, copper plating, brass plating, ternary plating such as copper-cobalt-zinc plating, etc., and the like. Moreover, a metal cord such as a steel cord and the like preferably comprises, on its surface, a plating layer of binary plating of copper and zinc, ternary plating of copper, zinc, and cobalt, or ternary plating of copper, zinc, and iron. When the metal cord comprises a plating layer on its surface, it is considered that adhesion performance for a topping rubber is improved.

The plating layer can be formed, for example, by forming a copper layer and a zinc layer, and a cobalt layer, a nickel layer, or the like as necessary on a metal cord such as a steel cord and the like by means of plating, followed by diffusing metal of each layer formed on a surface of the metal cord by heat treatment. A stacking order of the plating layers formed on the surface of the metal cord is not particularly limited, and for example, the copper layer and the zinc layer may be stacked in this order from the metal-cord side. Moreover, it is preferable that the cobalt layer is formed between the copper layer and the zinc layer or on the zinc layer. It is preferable that an iron layer is formed between the copper layer and the zinc layer.

A cord diameter of a metal cord is, but not particularly limited to, preferably 0.15 mm or more, more preferably 0.18 mm or more, further preferably 0.20 mm or more, further preferably 0.30 mm or more. Moreover, the cord diameter of the metal cord is preferably 0.60 mm or less, more preferably 0.55 mm or less, further preferably 0.50 mm or less, further preferably 0.40mm or less, from the viewpoint of a reduction of a tire weight.

Moreover, in the present embodiment, the internal member is preferably an inner liner and/or an insulation, more preferably an inner liner. When the internal member is an inner liner and/or an insulation, intrusion of water from a tire inner surface into a belt is suppressed, and it is considered that adhesion performance for a topping rubber and a metal cord is maintained and improved.

(Inequality (1))

In the tire of the present embodiment, A and B satisfy the relation of the inequality (1),

$$(1)\ B/(A+5) > 1.$$

In the inequality (1), when B becomes large, a value on the left side of the inequality (1) becomes large, and conversely, when B becomes small, the value on the left side of the inequality (1) becomes small. A has a value of 0.03 or less.

The right side of the inequality (1) is preferably 1.5, more preferably 2, further preferably 3, further preferably 4, further preferably 5. On the other hand, an upper limit of the left side of the inequality (1) is not particularly limited and is usually about 15 or may be about 12 or about 10.

(Inequality (2))

In the tire of the present embodiment, T, L, and B preferably satisfy the relation of the inequality (2),

$$(2)\ T \times L \times B > 10.$$

In the inequality (2), when T, L, and B become large, a value on the left side of the inequality (2) becomes large, and conversely, when they become small, the value on the left side of the inequality (2) becomes small.

Here, the right side of the inequality (2) is preferably 20, more preferably 30, further preferably 50. On the other hand, an upper limit of the left side of the inequality (2) is not particularly limited and is usually about 100 or may be about 80 or about 60.

A value of L is, for example, 0.1 mm or more, preferably 0.5 mm or more, more preferably 0.7 mm or more, further preferably 1.0 mm or more. On the other hand, the value is preferably 5.0 mm or less, more preferably 4.5 mm or less, further preferably 4.0 mm or less.

The value, in mm, of L can vary in accordance with type of the internal member. In a case of an insulation, for example, a thickness of the insulation is preferably 0.1 mm or more, more preferably 0.5 mm or more, further preferably 0.7 mm or more. Its upper limit is, but not particularly limited to, preferably 2 mm or less, more preferably 1.5 mm or less, further preferably 1.0 mm or less.

In a case of an inner liner, for example, a thickness of the inner liner is preferably 0.5 mm or more, more preferably 0.7 mm or more, further preferably 1.0 mm or more. Its upper limit is, but not particularly limited to, preferably 2.5 mm or less, more preferably 2.0 mm or less, further preferably 1.5 mm or less.

A thickness T, in mm, of a belt is preferably 0.5 mm or more, more preferably 0.8 mm or more, further preferably 1.0 mm or more, further preferably 1.5 mm or more, further preferably 2.0 mm or more. Its upper limit is, but not particularly limited to, preferably 4.5 mm or less, more preferably 4.0 mm or less, further preferably 3.5 mm or less, further preferably 3.0 mm or less.

(Inequality (3))

In the tire of the present embodiment, B, C, and L preferably satisfy the relation of the inequality (3),

$$(3)\ B/(B+C) \times L < 1.$$

In the inequality (3), when B and L become large, a value on the left side of the inequality (3) becomes large, and conversely, when B and L become small, the value on the left side of the inequality (3) becomes small. Moreover, when a value of C is increased, the value on the left side of the inequality (3) becomes small, and when the value of C is decreased, the value on the left side of the inequality (3) becomes large.

Here, the right side of the inequality (3) is preferably 0.8, more preferably 0.6, further preferably 0.5. On the other hand, a lower limit of the left side of the inequality (3) is not particularly limited and may be about 0.1, more preferably about 0.2, further preferably about 0.3.

(Inequality (4))

In the tire of the present embodiment, A, E, and T preferably satisfy the relation of the inequality (4),

$$(4)\ (A+E)/T > 1.$$

In the inequality (4), when values of A and E become large, a value on the left side of the inequality (4) becomes large, and conversely, when those values become small, the value on the left side of the inequality (4) becomes small. Moreover, when T is increased, the value on the left side of the inequality (4) becomes small, and conversely, when T is decreased, the value on the left side of the inequality (4) becomes large.

Here, the right side of the inequality (4) is preferably 1.2, more preferably 1.5, further preferably 1.7, further preferably 1.9. On the other hand, an upper limit of the left side of the inequality (4) is not particularly limited and is usually about 6 or may be about 5 or about 4.

A rubber composition constituting a belt topping rubber, and a rubber composition constituting an internal member, specifically, rubber compositions constituting an inner liner and an insulation will be described below.

<Rubber composition constituting belt topping rubber>

The rubber composition constituting a belt topping rubber will be described below. Moreover, in the present specification, the rubber composition constituting the belt topping rubber may also be referred to as a "rubber composition for belt topping rubber".

(Rubber component)

A rubber component can comprise at least one rubber selected from an isoprene-based rubber (IR-based rubber), a butadiene rubber (BR), and a styrene-butadiene rubber (SBR). The rubber component preferably comprises an isoprene-based rubber (IR-based rubber).

<<IR-based rubber>>

Examples of the isoprene-based rubber include a natural rubber (NR), an isoprene rubber (IR), a refined NR, a modified NR, a modified IR, and the like. As the NR, for example, those common in the tire industry can be used, such as SIR20, RSS#3, TSR20 and the like. The IR is not particularly limited, and as the IR, for example, those common in the tire industry can be used, such as IR2200 and the like. Examples of the refined NR include a deproteinized natural rubber (DPNR), an ultra pure natural rubber (UPNR), and the like. Examples of the modified NR include an epoxidized natural rubber (ENR), a hydrogenated natural rubber (HNR), a grafted natural rubber, and the like. Examples of the modified IR include an epoxidized isoprene rubber, a hydrogenated isoprene rubber, a grafted isoprene rubber, and the like. The isoprene-based rubbers may be used alone, or two or more thereof may be used in combination.

<<BR>>

The BR is not particularly limited, and examples of the BR include those common in the tire industry, such as, for example, a BR having a high cis content, a BR containing a 1,2-syndiotactic polybutadiene crystal (SPB-containing BR), a butadiene rubber synthesized using a rare-earth element-based catalyst (a rare-earth-based BR), a tin-modified butadiene rubber modified by a thin compound (tin-modified BR), a modified butadiene rubber other than these BRs (modified BR), and the like. As a commercially available product of the BR, products from UBE Corporation, JSR Corporation, Asahi Kasei Corporation, Ltd., Zeon Corporation, etc. can be used. It is sufficient that the modified BR is a BR having a functional group interacting with a filler such as silica and the like. Examples of the modified BR include, for example, a terminal-modified BR obtained by modifying at least one terminal of a BR with a compound (a modifying agent) having the above-described functional group (terminal-modified BR having the above-described functional group at its terminal), a main chain modified BR whose main chain has the above-described functional group, a main chain terminal-modified BR having the above-described functional groups on its main chain and at its terminal (for example, a main chain terminal-modified BR whose main chain has the above-described functional group and at least one terminal of which is modified with the above-described modifying agent), a terminal-modified BR which is modified (coupled) with a polyfunctional compound having two or more epoxy groups in a molecule and into which a hydroxyl group or an epoxy group is introduced, and the like. Examples of the above-described functional group include, for example, an amino group, an amido group, a silyl group, an alkoxysilyl group, an isocyanate group, an imino group, an imidazole group, an urea group,

an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, an epoxy group, and the like. Besides, these functional groups may have a substituent. Among them, an amino group (preferably an amino group whose hydrogen atom is substituted with an alkyl group having 1 to 6 carbon atoms), an alkoxy group (preferably an alkoxy group having 1 to 6 carbon atoms), and an alkoxysilyl group (preferably an alkoxysilyl group having 1 to 6 carbon atoms) are preferable.

A cis content of a BR is preferably greater than 90 mol%, more preferably greater than 93 mol%, further preferably greater than 95 mol%, further preferably 97 mol% or more. The cis content of the BR can be measured by the above-described method.

As the BR, for example, products from UBE Corporation, JSR Corporation, Asahi Kasei Corporation, Ltd., Zeon Corporation, etc. can be used. The BR may be used alone, or two or more thereof may be used in combination.

<<SBR>>

The styrene-butadiene rubber (SBR) is not particularly limited, examples of which include, for example, an unmodified emulsion-polymerized styrene-butadiene rubber (E-SBR), an unmodified solution-polymerized styrene-butadiene rubber (S-SBR), and modified SBRs obtained by modifying these SBRs, such as a modified emulsion-polymerized styrene-butadiene rubber (modified E-SBR) and a modified solution-polymerized styrene-butadiene rubber (modified S-SBR), and the like. Examples of the modified SBR include a modified SBR modified at its terminal and/or main chain, a modified SBR coupled with tin, a silicon compound, etc. (a modified SBR of condensate or having a branched structure, etc.), and the like. Moreover, types of the SBR include an oil-extended type whose flexibility is adjusted by addition of an extending oil and a non-oil-extended type to which no extending oil is added, any of which can be used. As such an SBR, for example, products from JSR Corporation, Asahi Chemicals Co., Ltd., Zeon Corporation, ZS Elastomer Co., Ltd., etc. can be used. The SBR may be used alone, or two or more thereof may be used in combination.

A styrene content of an SBR is preferably greater than 15.0% by mass, more preferably greater than 20.0% by mass, further preferably greater than 23.0% by mass, from the viewpoints of rubber strength and grip performance. Moreover, the styrene content is preferably less than 40.0% by mass, more preferably less than 30.0% by mass, further preferably less than 25.0% by mass, from the viewpoint of fuel efficiency. Besides, the styrene content of the SBR is a value calculated by the above-described method.

A vinyl content (1,2-bond butadiene unit amount) of an SBR is preferably greater than 10.0 mol%, more preferably greater than 15.0 mol%, more preferably 18.0 mol% or more, from the viewpoints of rubber strength and grip performance. Moreover, the vinyl content is preferably less than 80.0 mol%, preferably less than 50.0 mol%, more preferably less than 30.0 mol%, from the viewpoint of fuel efficiency. Besides, the vinyl content of the SBR is a value measured by the above-described method.

<<Content>>

A content of an IR-based rubber in 100% by mass of the rubber component is, for example, 70% by mass or more, preferably 80% by mass or more, more preferably 90% by mass or more, further preferably 95% by mass or more or may be 100% by mass.

A content of a BR when compounded in 100% by mass of the rubber component is, for example, less than 30% by mass, preferably less than 20% by mass, more preferably less than 10% by mass, further preferably less than 5% by mass. A lower limit of the content is not particularly limited and may be 0% by mass or, for example, 1% by mass.

A content of an SBR when compounded in 100% by mass of the rubber component is, for example, less than 30% by mass, preferably less than 20% by mass, more preferably less than 10% by mass, further preferably less than 5% by mass. A lower limit of the content is not particularly limited and may be 0% by mass or, for example, 1% by mass.

(Other rubber components)

Examples of rubber components other than butyl-based rubbers include, for example, a diene-based rubber, such as an isoprene-based rubber (IR-based rubber), a butadiene rubber (BR), a styrene- butadiene rubber (SBR), a styrene-isoprene-butadiene rubber (SIBR), a chloroprene rubber (CR), an acrylonitrile-butadiene rubber (NBR), a polynorbornene rubber, and the like; and a non-diene-based rubber, such as a hydrogenated nitrile rubber (HNBR), an ethylene propylene rubber, a silicone rubber, a polyethylene chloride rubber, a fluororubber (FKM), an acrylic rubber (ACM), a hydrin rubber, and the like. Among them, the diene-based rubbers are preferable, and the isoprene-based rubber among them is preferable from the viewpoints of the improvements of stickiness and adhesiveness to an adjacent tire member, and the like. The other rubber components may be used alone, or two or more thereof may be used in

combination.

A content of another rubber component when compounded in 100% by mass of the rubber component may be, for example, greater than 1% by mass, preferably greater than 3% by mass, more preferably greater than 5% by mass, further preferably 8% by mass or more, for example, from the viewpoint of exertion of performance such as oil resistance, cold resistance, and the like. On the other hand, the content is preferably less than 30% by mass, more preferably less than 20% by mass, further preferably less than 15% by mass.

(Rubber component synthesized from recycle-derived/biomass-derived raw material)

A monomer that is a structural unit of a synthetic rubber such as an IR, an SBR, a BR, and the like may be one derived from underground resources such as petroleum, a natural gas, and the like or one recycled from a rubber product such as a tire and the like or a non-rubber product such as polystyrene and the like. Examples of monomers obtained by recycle (recycled monomers) include, but not particularly limited to, a recycle-derived polyisoprene, a recycle-derived butadiene, a recycle-derived aromatic vinyl compound, and the like. Examples of the above-described butadiene include 1,2-butadiene and 1,3 butadiene. Examples of the aromatic vinyl compound include, but not particularly limited to, styrene and the like. Among them, a recycle-derived polyisoprene (recycled isoprene), a recycle-derived butadiene (recycled butadiene), and/or a recycle-derived styrene (recycled styrene) are preferably used as raw materials.

A method of producing a recycled monomer is not particularly limited, examples of which include, for example, synthesis of a recycled monomer from recycle-derived naphtha obtained by decomposing a rubber product such as a tire and the like. Moreover, a method of producing a recycle-derived naphtha is not particularly limited, and a recycle-derived naphtha may be obtained from, for example, a rubber product such as a tire and the like by decomposing it under high temperature and pressure, by decomposing it by microwaves, or by mechanically pulverizing it and then extracting therefrom.

Furthermore, a monomer that is a structural unit of a polymer such as an IR, an SBR, a BR, and the like may be one derived from biomass. In the present specification, "biomass" refers to a material derived from natural resources such as plants and the like. Examples of biomass include, but not particularly limited to, for example, agricultural, forest and fishery products and sugar, wood waste, a plant residue after acquisition of a useful component, a plant-derived ethanol, a biomass naphtha, and the like.

Examples of the biomass-derived monomer (biomass monomer) include, but not particularly limited to, a biomass-derived butadiene, a biomass-derived aromatic vinyl compound, and the like. Examples of the above-described butadiene include 1, 2-butadiene and 1,3-butadiene. Examples of the above-described aromatic vinyl compound include, but not particularly limited to, styrene and the like. Moreover, a method of producing a biomass monomer is not particularly limited, examples of which include, for example, a method by biological and/or chemical and/or physical conversion of an animal or a plant, and the like. A microbial fermentation is representative of biological conversion, and examples of chemical and/or physical conversion include a method using a catalyst, a method using a high heat, a method using a high pressure, a method using an electromagnetic wave, a method using a critical liquid, and combinations thereof.

Examples of a polymer synthesized from a biomass monomer component (biomass polymer) include, but not particularly limited to, a polybutadiene rubber synthesized from a biomass-derived butadiene, an aromatic vinyl/butadiene copolymer synthesized from a biomass-derived butadiene and/or a biomass-derived aromatic vinyl compound, and the like. Examples of the aromatic vinyl/butadiene copolymer include, for example, a styrene-butadiene rubber synthesized from a biomass-derived butadiene and/or a biomass-derived styrene, and the like.

Whether or not a raw material of a polymer is derived from biomass can be determined from percent Modern Carbon (pMC) measured according to ASTM D6866-10. "pMC" means a ratio of $^{14}C$ concentration of a sample to $^{14}C$ concentration of a modern standard carbon (modern standard reference) and is a value used as an index that indicates a biomass ratio of a compound. A significance of this value will be mentioned below.

In 1 mole of carbon atoms ($6.02\times10^{23}$), there are about $6.02\times10^{11}$ $^{14}C$ that are about one trillionth of the number of normal carbon atoms. A half-life of $^{14}C$ is 5730 years, and $^{14}C$ regularly decreases. Therefore, in fossil fuels such as coal, petroleum, natural gas, and the like, where it is considered that 226,000 years or more have passed since carbon dioxide in the atmosphere and the like was absorbed by plants and the like to be fixed, all of $^{14}C$ elements, which were also contained in them at the beginning of fixation, have decayed. Therefore, in the present 21st century, fossil fuels such as coal, petroleum, natural gas, and the like do not contain any $^{14}C$ element. Accordingly, chemical substances produced using these fossil fuels as raw materials do not contain any $^{14}C$ element as well.

On the other hand, $^{14}C$ is constantly generated by cosmic rays causing nuclear reactions in the atmosphere. Therefore, decrease in $^{14}C$ due to radioactive decay and generation of $^{14}C$ due to nuclear reactions are balanced, and the amount of $^{14}C$ has been constant in the atmosphere environment of the earth. Therefore, the $^{14}C$ concentration of substances derived from biomass resources that have been circulating in the current environment becomes a value of about $1\times10^{-12}$ mol% based on the entire carbon atoms, as described above. Accordingly, by utilizing a difference between these values, a biomass ratio in a certain compound can be calculated.

This $^{14}C$ is generally measured as follows. A $^{13}C$ concentration ($^{13}C/^{12}C$ ) and a $^{14}C$ concentration ($^{14}C/^{12}C$) are measured using an accelerator mass spectrometry based on a tandem accelerator. In the measurements, a $^{14}C$ concentration in a circulating carbon in nature as of 1950 is adopted as the modern standard reference that becomes a reference for the $^{14}C$ concentration. As a specific reference material, an oxalic acid standard provided by NIST (National Institute of Standard and Technology) is used. A specific radioactivity of carbon in this oxalic acid (radioactivity intensity of $^{14}C$ per gram of carbon) is sorted for each carbon isotope, $^{13}C$ is corrected to be a constant value, and a value corrected for attenuation correction from 1950 to the date of measurement is used as a standard $^{14}C$ concentration value (100%). A ratio of this value and a value actually measured for a sample becomes a pMC value.

Thus, if a rubber is produced from a material derived from 100% biomass, the $^{14}C$ concentration shows a value of approximately 110 pMC as, currently, under a normal condition, it is often not equal to 100, though there are regional differences and the like. On the other hand, if this $^{14}C$ concentration is measured for a chemical substance derived from a fossil fuel such as petroleum and the like, it shows a value of approximately 0 pMC (for example, 0.3 pMC). This value corresponds to a biomass ratio of 0% as mentioned above.

From above, it is appropriate in terms of environmental protection to use a material such as a rubber having a high pMC value, that is, a material such as a rubber having a high biomass ratio, for a rubber composition.

(Filler)

The present rubber composition preferably comprises a filler. The filler can comprise carbon black (CB) or silica. It preferably comprises carbon black. In a case where the filler comprises silica, the filler can further comprise a silane coupling agent. The filler can further comprise another filler other than carbon black and silica. Examples of such another filler include those conventionally and commonly used in the tire industry, such as aluminum hydroxide, calcium carbonate, alumina, clay, talc, and the like. The filler may be one consisting of carbon black and silica or one consisting of carbon black.

<<Carbon black>>

Examples of carbon black include, but not particularly limited to, N134, N110, N220, N234, N219, N339, N330, N326, N351, N550, N762, and the like. A raw material of carbon black may be a biomass material such as lignin, vegetable oil, and the like or may be pyrolysis oil obtained by pyrolyzing a waste tire. Moreover, a method of producing carbon black may be a method using combustion such as a furnace method, may be a method using hydrothermal carbonization (HTC), or may be a method using pyrolysis of methane by a thermal black method and the like. As a commercially available product, products from ASAHI CARBON CO., LTD., Cabot Japan K.K., TOKAI CARBON CO., LTD., Mitsubishi Chemical Corporation., Lion Corporation., NIPPON STEEL Chemical & Material Co., Ltd., Columbia Carbon Corporation., etc. can be used. The carbon black may be used alone, or two or more thereof may be used in combination.

Moreover, as carbon black other than the above-described carbon black, carbon black made of a biomass material such as lignin and the like or a recovered carbon black obtained by pyrolyzing a product comprising carbon black such as a tire and the like followed by refining may be used from the viewpoints of a life cycle assessment, etc.

In the present specification, the term "recovered carbon black" refers to carbon black obtained by pulverizing a product such as a used tire comprising carbon black and the like and baking the pulverized product, in which, after the product is subjected to oxidative combustion by heating in the air, a ratio of a mass of ash (ash content), which is a component that does not combust, is 13% by mass or more according to a thermal weight measurement method of JIS K 6226-2:2003. That is, a ratio of a mass (carbon amount) of a weight lost content due to the oxidative combustion of the recovered carbon black is 87% by mass or less. The recovered carbon black may be expressed by rCB.

A recovered carbon black can be obtained from a pyrolysis process of a used pneumatic tire. For example, EP 3427975 A describes, with reference to "Rubber Chemistry and Technology", Vol. 85, No. 3, Pages 408 to 449 (2012), in particular, Pages 438, 440, and 442, that the recovered carbon black can be obtained by pyrolysis at 550 to 800°C excluding oxygen or vacuum pyrolysis at a relatively low temperature, of an organic material ([0027]). As described in [0004] of JP 6856781 B, such carbon black obtained by the pyrolysis process usually lacks a functional group on its surface (A Comparison of Surface Morphology and Chemistry of Pyrolytic Carbon Blacks with Commercial Carbon Blacks, Powder Technology 160 (2005) 190-193).

The recovered carbon black may be one that lacks a functional group on its surface or may be one treated so as to include a functional group on its surface. The treatment of the recovered carbon black so that the recovered carbon black includes a functional group on its surface can be performed by a usual method. For example, in EP 3173251 A, carbon black obtained from a pyrolysis process is treated with potassium permanganate under an acidic condition, thereby obtaining carbon black including a hydroxyl group and/or a carboxyl group on its surface. Moreover, in JP 6856781 B, carbon black obtained from a pyrolysis process is treated with an amino acid compound including at least one thiol group or disulfide group, thereby obtaining carbon black whose surface is activated. Examples of the recovered carbon black relating to the present embodiment also include carbon black treated so as to include a functional group on its surface.

As the recovered carbon black, those commercially available from Strebl Green Carbon Pte Ltd., LD Carbon, etc. can be used.

A nitrogen adsorption specific surface area ($N_2SA$) of carbon black is, but not particularly limited to, preferably greater than 20 $m^2/g$, more preferably greater than 30 $m^2/g$, further preferably greater than 40 $m^2/g$, further preferably greater than 50 $m^2/g$, further preferably greater than 60 $m^2/g$, from the viewpoint that a sufficient reinforcing property and a good abrasion resistance can be obtained. Moreover, an upper limit of the $N_2SA$ is preferably less than 300 $m^2/g$, from the viewpoints of an excellent dispersibility and unlikeliness for heat generation. Besides, the $N_2SA$ of the carbon black in the present specification is a value measured by the above-described method.

<<Content of carbon black>>

A content of carbon black is preferably greater than 20 parts by mass, more preferably greater than 30 parts by mass, further preferably greater than 40 parts by mass, further preferably 50 parts by mass or more, based on 100 parts by mass of the rubber component, from the viewpoint of reinforcing property. On the other hand, the content may be preferably less than 100 parts by mass, more preferably less than 90 parts by mass, further preferably less than 80 parts by mass, further preferably 70 parts by mass or less, from the viewpoint of reinforcing property.

<<Silica>>

The rubber composition can comprise silica as a filler. Silica is not particularly limited, and those common in the tire industry can be used, such as, for example, silica prepared by a dry process (anhydrous silica), silica prepared by a wet process (hydrous silica), and the like. A raw material of silica is not particularly limited and may be, for example, a raw material derived from a mineral such as quartz or a raw material derived from a biological substance such as rice husks (for example, silica made from a biomass material such as rice husks, and the like), or silica recycled from a product containing silica may be used. Among them, hydrous silica prepared by a wet process is preferable for the reason that it has many silanol groups. The silica may be used alone, or two or more thereof may be used in combination.

Silica made from a biomass material can be obtained by, for example, burning rice husks to obtain rice husk ashes, extracting silicate from the rice husk ashes using a sodium hydroxide solution, generating silicon dioxide by reacting the silicate with sulfuric acid in the same manner as a conventional wet silica, and filtering, washing with water, drying and pulverizing precipitates of the silicon dioxide.

As silica recycled from a product comprising silica, silica recovered from such a product as an electronic component like a semiconductor, a tire, a desiccant, a filtering material like diatomaceous earth, or the like can be used. Moreover, a recovering method is not particularly limited, examples of which include pyrolysis, decomposition by electromagnetic waves, and the like. Among them, silica recovered from an electronic component such as a semiconductor and the like or from a tire is preferable.

When silica crystallizes, it is insoluble in water, and silicic acid that is a component thereof cannot be used. By controlling a burning temperature and a burning time, crystallization of silica in rice husk ashes can be suppressed (see JP 2009-2594 A, Akita Prefectural University Web Journal B/2019, vol.6, p.216-222, etc.). As an amorphous silica extracted from rice husks, those commercially available from Wilmar, etc. can be used.

A nitrogen adsorption specific surface area ($N_2SA$) of silica is preferably greater than 50 $m^2/g$, more preferably greater than 100 $m^2/g$, further preferably greater than 150 $m^2/g$, further preferably greater than 170 $m^2/g$. Moreover, an upper limit of the $N_2SA$ of silica is, but not particularly limited to, preferably less than 350 $m^2/g$, more preferably less than 250 $m^2/g$, further preferably less than 200 $m^2/g$. When it is within the above-described ranges, cut resistance tends to be improved. Besides, the $N_2SA$ of the silica is a value measured by the above-described method.

A content of silica when compounded based on 100 parts by mass of the rubber component is, but not particularly limited to, preferably greater than 1 part by mass, preferably greater than 5 parts by mass, more preferably greater than 10 parts by mass, further preferably greater than 20 parts by mass, from the viewpoints of fuel efficiency and securement of ride comfort. Moreover, the content is preferably less than 60 parts by mass, more preferably less than 50 parts by mass, further preferably less than 40 parts by mass, from the viewpoints of dispersibility of silica and processability.

<<Silane coupling agent>>

In a case where silica is used, the rubber composition preferably further comprises a silane coupling agent. Examples of the silane coupling agent include, but not particularly limited to, for example, sulfide-based ones such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N, N-dimethylthiocarbamoyl tetrasulfide, 2-triethoxysilylethyl-N, N-dimethylthiocarbamoyl tetrasulfide, 3-triethoxysilylpropyl methacrylate monosulfide, and the like; mercapto-based ones such as 3-mercaptopropyltrimethoxysilane, 2-mercaptoethyltriethoxysilane, NXT and NXT-Z manufactured by Momentive Performance Materials, and the like; vinyl-based ones such as vinyltriethoxysilane, vinyltrimethoxysilane, and the like; amino-based ones such as 3-aminopropyltriethoxysilane, 3-aminopropyltrimethoxysilane, and the like; glycidoxy-based ones such as γ-glycidoxypropyltriethoxysilane, γ-glycidoxypropyltrimethoxysilane, and the like; nitro-based ones such as 3-nitropropyltrimethoxysilane, 3-nitropropyltriethoxysilane, and the like; and chloro-based ones such as 3-chloropropyltrimethoxysilane, 3-chloropropyltriethoxysilane, and the like. As a commercially available product, products from Evonik Industries AG, Momentive Performance Materials, Shin-Etsu Chemical Co., Ltd., Tokyo Chemical Industry Co, Ltd., AZmax.co, Dow Corning Toray Co., Ltd., etc. can be used. The silane coupling agents may be used alone, or two or more thereof may be used in combination.

A content of a silane coupling agent when compounded based on 100 parts by mass of silica is preferably greater than 1 part by mass, more preferably greater than 3 parts by mass, further preferably greater than 5 parts by mass, further preferably greater than 7 parts by mass. On the other hand, the content is preferably less than 20 parts by mass, more preferably less than 18 parts by mass, further preferably less than 16 parts by mass, further preferably less than 14 parts by mass. When the content is within the above-described ranges, dispersibility of the silica tends to be improved.

(Bismaleimide compound)

The present rubber composition can comprise a bismaleimide compound. When the present rubber composition comprises a bismaleimide compound, adhesiveness to a metal cord is improved. Moreover, the bismaleimide compound can perform similar function to a vulcanizing agent. Moreover, the present rubber composition can comprise a vulcanizing agent described below, in addition to a bismaleimide compound.

As a bismaleimide compound, one or two or more selected from the group consisting of compounds expressed by the following chemical formula can be used:

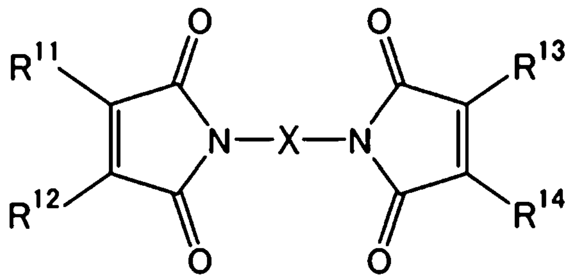

wherein, X represents an alkylene group having 2 to 6 carbon atoms, a phenylene group, or a divalent hydrocarbon group having 1 to 4 aromatic rings and having 6 to 29 carbon atoms, and $R^{11}$ to $R^{14}$ each independently represent a hydrogen atom, an alkyl group having 1 to 5 carbon atoms, a $-NH_2$ group, or a $-NO_2$ group.

In the above-described chemical formula, examples of the alkylene group having 2 to 6 carbon atoms which is represented by X include an ethylene group, a propane-1,3-diyl group, a propane-2,2-diyl group, a tetramethylene group, a pentamethylene group, a hexamethylene group, and the like. Examples of the divalent hydrocarbon group having 1 to 4 aromatic rings and having 6 to 29 carbon atoms include a methylenebis(phenylene) group, a phenylenebis(methylene) group, a phenoxyphenyl group, and the like. Moreover, these aromatic rings may be bonded by -O-, -S-, -SS-, $-SO_2-$, or the like. In X described above, a phenylene group or a hydrocarbon group having one or two aromatic rings and having 8 to 17 carbon atoms is appropriate, and a phenylene group or a hydrocarbon group having one or two aromatic rings and having 8 to 13 carbon atoms is more preferable. In the above-described chemical formula, X may have a substituent. Examples of this substituent include, for example, an alkyl group having 1 to 3 carbon atoms, $-NH_2$, $-NO_2$, - F, -C1, -Br, and the like. Moreover, in the above-described chemical formula, examples of the alkyl group having 1 to 5 carbon atoms which is represented by $R^{11}$ to $R^{14}$ include, for example, a methyl group, an ethyl group, a propyl group, and the like.

Appropriate examples of the bismaleimide compound include, for example, N,N'-1,2-Ethylenebismaleimide, N,N'-1,2-Propylenebismaleimide, 4,4'-Diphenylmethanebismaleimido, N,N'-m-phenylenebismaleimide, N,N'-(4,4-Diphenyl-methane)bismaleimide, Bis(3-ethyl-5-methyl-4-maleimidophenyl)methane, 2,2'-Bis[4-(4-maleimidophenoxy) phenyl]propane, m-Phenylenebis(methylene)bismaleimide, m-Phenylenebis(methylene)biscitraconimide, 1,1'-(Methylenedi-4,1-phenylene)bismaleimide, and the like. Among them, 4,4'-Diphenylmethanebismaleimido is preferable. The bismaleimide compounds may be used alone, or two or more thereof may be used in combination.

<<Content E of bismaleimide compound >>

In the present rubber composition, a content of a bismaleimide compound based on 100 parts by mass of the rubber component is preferably greater than 0.1 parts by mass, more preferably greater than 0.5 parts by mass, further preferably 1.0 parts by mass or more. Moreover, the content is preferably less than 5.5 parts by mass, more preferably less than 5.0 parts by mass, further preferably 4.0 parts by mass or less. When the content of the bismaleimide compound is within the above-described ranges, an elastic modulus is increased, and adhesiveness tends to be able to be improved.

(Cobalt)

In the present rubber composition, a content A of cobalt in the present rubber composition is 0.03 parts by mass or less based on 100 parts by mass of the rubber component. In a case where the present rubber composition comprises cobalt, the cobalt is preferably compounded as cobalt organic acid salt in the present rubber composition. Since cobalt suppresses generation of an adhesion layer destruction-causing substance such as zinc sulfide, copper sulfide, or the like, adhesiveness between a metal cord and a topping rubber can be improved. Moreover, cobalt organic acid salt also has a role in crosslinking between the metal cord and the topping rubber. Examples of the cobalt organic acid salt include, for example, cobalt stearate, cobalt naphthenate, cobalt neodecanoate, cobalt borate neodecanoate, and the like.

A content of cobalt organic acid salt when compounded in the present rubber composition, which is calculated in terms of cobalt, is preferably 0.03 parts by mass or less, more preferably 0.02 parts by mass or less, further preferably 0.01 parts by mass or less, based on 100 parts by mass of the rubber component. The present rubber composition may not comprise cobalt.

(Other compounding agents)

The rubber composition can appropriately comprise compounding agents conventionally and commonly used in the tire industry, such as, for example, a plasticizing agent, a compatibilizer, processing aid, a vulcanized rubber particle, wax, stearic acid, zinc oxide, an antioxidant, a vulcanizing agent, a vulcanization accelerator, and the like, in addition to the rubber component and the filler.

<<Plasticizing agent>>

A plasticizing agent is a material giving a rubber component plasticity and includes both a plasticizing agent that is in a liquid state at 25°C and a plasticizing agent that is solid at 25°C. Examples of the plasticizing agent include a resin component, oil, a liquid rubber, an ester-based plasticizing agent, and the like. These plasticizing agents may be ones derived from mineral resources such as petroleum, natural gas, and the like, ones derived from biomass, or ones derived from naphtha recycled from a rubber product or non-rubber product. Moreover, low-molecular-weight hydrocarbon components obtained by pyrolyzing used tires or products containing various components and performing extraction from the pyrolysate may be used as plasticizing agents. The plasticizing agents may be used alone, or two or more thereof may be used in combination.

<<Resin component>>

The rubber composition relating to the present embodiment may comprise a resin component in combination. The resin component that can be used in the present embodiment is not particularly limited, and any resin commonly used in the tire industry can be used, examples of which include, for example, a C9-based resin, a C5-based resin, a C5/C9-based resin, a dicyclopentadiene-based resin, an aromatic vinyl-based resin, a coumarone-based resin, an indene-based resin, a terpene-based resin, a rosin-based resin, a phenol-based resin, and the like. These resin components may be used alone, or two or more thereof may be used in combination. Each resin component may also be used alone, or two or more thereof may be used in combination, respectively.

• C9-based resin

A "C9-based resin" refers to a resin obtained by polymerizing C9 fractions, and may be a polymer obtained by polymerizing a C9 fraction alone or a copolymer obtained by copolymerizing a C9 fraction with other components. For example, a resin obtained by copolymerizing dicyclopentadiene (DCPD) with a C9 fraction is referred to as a DCPD/C9 resin. Moreover, the C9-based resin may be one obtained by hydrogenating or modifying it. Examples of the C9 fraction include, for example, a petroleum fraction having 8 to 10 carbon atoms such as vinyltoluene, alkylstyrene, coumarone, indene, methylindene, dicyclopentadiene, and the like. As the C9-based resin, for example, those commercially available

from BASF, Zeon Corporation, ENEOS Corporation, etc. can be used.

• C5-based resin

A "C5-based resin" refers to a resin obtained by polymerizing C5 fractions and may be one obtained by hydrogenating or modifying it. Examples of C5 fractions other than dicyclopentadiene include, for example, a petroleum fraction having 4 to 5 carbon atoms, such as cyclopentadiene, isoprene, piperylene, 2-methyl-1-butene, 2-methyl-2-butene, 1-pentene, and the like. As the C5-based resin, for example, those commercially available from STRUKTOL, Zeon Corporation, ENEOS Corporation, etc. can be used.

• C5/C9-based resin

A "C5/C9-based resin" refers to a resin obtained by copolymerizing the C5 fraction and the C9 fraction and may be one obtained by hydrogenating or modifying it. As the C5/C9-based petroleum resin, for example, those commercially available from Tosoh Corporation, Zibo Luhua Hongjin New Material Group Co., Ltd, etc. can be used.

• Dicyclopentadiene-based resin

A "dicyclopentadiene-based resin" refers to a resin comprising cyclopentadiene (CPD) and/or dicyclopentadiene (DCPD) as a monomer component having the largest content and may be one obtained by hydrogenating or modifying it. As the dicyclopentadiene-based resin, for example, a polymer obtained by polymerizing only dicyclopentadiene as a monomer, a copolymer obtained by copolymerizing dicyclopentadiene with the C9 fraction (DCPD/C9 resin), and the like are preferable. As the dicyclopentadiene-based resin, for example, those commercially available from Exxon Mobil Corporation, ENEOS Corporation, Zeon Corporation, Maruzen Petrochemical Co., Ltd., etc. can be used.

• Aromatic vinyl-based resin

An "aromatic vinyl-based resin" refers to a resin comprising an aromatic vinyl compound such as styrene, α-methylstyrene, vinyltoluene, p-chlorostyrene, and the like as a monomer component having the largest content, and may be one obtained by hydrogenating or modifying it. As the aromatic vinyl-based resin, a homopolymer of α-methylstyrene or styrene or a copolymer of α-methylstyrene and styrene is preferable, and a copolymer of α-methylstyrene and styrene is more preferable, because it is economical, easy to process, and excellent in heat generation. As the aromatic vinyl-based resin, for example, those commercially available from Kraton Corporation, Eastman Chemical Company, Mitsui Chemicals, Inc., etc. can be used.

• Coumarone-based resin

A "coumarone-based resin" refers to a resin comprising coumarone as a monomer component and may be one obtained by hydrogenating or modifying it. As the coumarone-based resin, for example, a coumarone resin that is a polymer comprising only coumarone as a monomer component, a coumarone-indene resin that is a copolymer comprising coumarone and indene as monomer components, a coumarone-indene-styrene resin that is a copolymer comprising coumarone, indene, and styrene as monomer components, and the like are preferable. As the coumarone-based resin, for example, those commercially available from Rutgers Chemicals, Nitto Chemical Co., Ltd., Mitsui Chemicals, Inc., etc. can be used.

• Indene-based resin

An "indene-based resin" refers to a resin comprising indene as a monomer component and may be one obtained by hydrogenating or modifying it. As the indene-based resin, for example, a coumarone-indene resin that is a copolymer comprising coumarone and indene as monomer components, a coumarone-indene-styrene resin that is a copolymer comprising coumarone, indene, and styrene as monomer components, and the like are preferable. As the indene-based resin, for example, those commercially available from Rutgers Chemicals, Nitto Chemical Co., Ltd., Mitsui Chemicals, Inc., etc. can be used.

• Terpene-based resin

A "terpene-based resin" refers to a resin comprising a terpene compound such as α-pinene, β-pinene, limonene, dipentene, and the like as a monomer component, and may be one obtained by hydrogenating or modifying it. As the

terpene-based resin, for example, a polyterpene resin that is a polymer comprising only one or more of the terpene compounds as monomer components, an aromatic-modified terpene resin that is a copolymer comprising the terpene compound and an aromatic compound as monomer components, a terpene phenolic resin that is a copolymer comprising the terpene compound and a phenol compound as monomer components, and the like are preferable. Examples of the aromatic compound used as a monomer component for the aromatic-modified terpene resin include, for example, styrene, $\alpha$-methylstyrene, vinyltoluene, divinyltoluene, and the like. Examples of the phenol compound used as a monomer component for the terpene phenolic resin include, for example, phenol, bisphenol A, cresol, xylenol, and the like. As the terpene-based resin, for example, those commercially available from Yasuhara Chemical Co., Ltd., Arakawa Chemical Industries, Ltd., Nippon Terpene Chemicals, Inc., etc. can be used.

• Rosin-based resin

A "rosin-based resin" refers to a resin comprising a rosin acid compound such as abietic acid, neoabietic acid, palustric acid, isopimaric acid, and the like, and may be one obtained by hydrogenating or modifying it. Example of the rosin-based resin include, but not particularly limited to, for example, a natural resin rosin, a rosin-modified resin obtained by modifying the natural resin rosin by hydrogenation, disproportionation, dimerization, esterification, etc., and the like. As the rosin-based resin, for example, those commercially available from Harima Chemicals Group, Inc., Arakawa Chemical Industries, Ltd., IREC Co., Ltd., etc. can be used.

• Phenol-based resin

A "phenol-based resin" refers to a resin comprising a phenolic compound such as phenol, cresol, and the like as a monomer component, and may be one obtained by hydrogenating or modifying it. Examples of the phenol-based resin include, but not particularly limited to, a phenol formaldehyde resin, an alkylphenol formaldehyde resin, an alkylphenol acetylene resin, an oil-modified phenol formaldehyde resin, a terpene phenolic resin, and the like. As the phenol-based resin, for example, those commercially available from Sumitomo Bakelite Co., Ltd., DIC Corporation, ASAHI YUKIZAI CORPORATION, etc. can be used.

A softening point of a resin component is preferably 60°C or higher, more preferably 70°C or higher, further preferably 80°C or higher and, at the same time, is preferably 150°C or lower, more preferably 140°C or lower, further preferably 130°C or lower, from the viewpoints of processability, improvement in dispersibility of a rubber component with a filler, etc. Besides, the softening point of the resin component is measured by the above-described measuring method.

A content of a resin component when compounded based on 100 parts by mass of the rubber component is preferably greater than 0.5 parts by mass, more preferably greater than 1 part by mass, further preferably 1.5 parts by mass or more. On the other hand, the content is preferably less than 30 parts by mass, more preferably less than 20 parts by mass, further preferably less than 15 parts by mass.

<<Compatibilizer>>

A compatibilizer is compounded for the purpose of reducing a separation energy on an interface between a rubber component and a filler or between different types of rubber components and aiding in intermixing with each other. A compatibilizer is not particularly limited, and those conventionally used in the tire industry can be used as a compatibilizer. Specific examples of the compatibilizer include, for example, non-reactive compatibilizers such as an ethylene-propylene-styrene copolymer, a styrene-ethylene-butadiene block copolymer, a styrene-methyl methacrylate block copolymer, an ethylene-styrene graft copolymer, a chlorinated polyethylene, a mixture of an aromatic hydrocarbon-based resin and an aliphatic hydrocarbon-based resin, a metallic soap of an unsaturated fatty acid, and the like; and reactive compatibilizers such as a maleic anhydride graft polypropylene, a styrene-maleic anhydride copolymer, an ethylene-glycidyl methacrylate copolymer, a styrene graft copolymer to an ethylene-glycidyl methacrylate copolymer, and the like. Among them, an ethylene-propylene-styrene copolymer is preferable. The compatibilizers may be used alone, or two or more thereof may be used in combination.

<<Oil>>

Examples of oil include, for example, mineral oils, vegetable oils, animal oils, and the like. Moreover, from the viewpoint of a life cycle assessment, one obtained by refining a waste oil after use for a rubber mixing machine or an engine or waste cooking oil used in a cooking facility may be also used. The oils may be used alone, or two or more thereof may be used in combination.

In the present specification, "mineral oil" refers to oil derived from mineral resources such as petroleum, natural gas, and the like. Examples of mineral oil include paraffinic oils (mineral oils), naphthenic oils, aromatic oils, and the like.

Specific examples of the mineral oils include, for example, MES (Mild Extracted Solvate), DAE (Distillate Aromatic Extract), TDAE (Treated Distillate Aromatic Extract), TRAE (Treated Residual Aromatic Extract), RAE (Residual Aromatic Extract), and the like. Moreover, as an environmental measure, oils each having a low content of a polycyclic aromatic compound (PCA) can also be used. Examples of the oils each having a low content of a PCA include MES, TDAE, heavy naphthenic oil, and the like. The mineral oils may be used alone, or two or more thereof may be used in combination.

In the present specification, examples of the vegetable oils include, for example, a linseed oil, a rapeseed oil, a safflower oil, a soybean oil, a corn oil, a cottonseed oil, a rice bran oil, a tall oil, a sesame oil, perilla oil, a castor oil, a tung oil, a pine oil, a pine tar oil, a sunflower oil, a coconut oil, a palm oil, a palm kernel oil, an olive oil, a camellia oil, a jojoba oil, a macadamia nut oil, a peanut oil, a grapeseed oil, a Japan wax, and the like. Furthermore, examples of the vegetable oils also include a refined oil obtained by refining the above-described oil (a salad oil, etc.), a transesterified oil obtained by transesterifying the above-described oil, a hydrogenated oil obtained by hydrogenating the above-described oil, a thermally polymerized oil obtained by thermally polymerizing the above-described oil, an oxidized polymerized oil obtained by oxidizing the above-described oil, a waste cooking oil obtained by recovering what was utilized as an edible oil, etc., and the like. Besides, the vegetable oil may be liquid or solid at 25°C. The vegetable oils may be used alone, or two or more thereof may be used in combination.

The vegetable oil relating to the present embodiment preferably comprises acylglycerol, and more preferably comprises triacylglycerol. Besides, in the present specification, acylglycerol refers to a compound in which a hydroxy group of glycerin and a fatty acid are ester-bonded. The acylglycerol is not particularly limited and may be 1-monoacylglycerol, 2-monoacylglycerol, 1,2-diacylglycerol, 1,3-diacylglycerol, or triacylglycerol. Furthermore, the acylglycerol may be a monomer, a dimer, or a multimer that is a trimer or higher. Besides, acylglycerol that is a dimer or higher can be obtained by thermal polymerization, oxidative polymerization, or the like. Moreover, the acylglycerol may be liquid or solid at 25°C.

Whether the rubber composition comprises the above-described acylglycerol can be confirmed by, but not particularly limited to, $^1$H-NMR measurement. For example, a heavy chloroform in which a rubber composition containing triacylglycerol is immersed at 25°C for 24 hours and then removed is subjected to $^1$H-NMR measurement at room temperature, and signals near 5.26 ppm, near 4.28 ppm, and near 4.15 ppm are observed under a condition that a signal of tetramethylsilane (TMS) is set to 0.00 ppm. These signals are presumed to be derived from hydrogen atoms bonded to carbon atoms adjacent to oxygen atoms of the ester group. Besides, "near" in this paragraph shall be a range of $\pm$0.10 ppm.

The above-described fatty acid is not particularly limited and may be an unsaturated fatty acid or a saturated fatty acid. Examples of the unsaturated fatty acid include monounsaturated fatty acids such as oleic acid and the like; and polyunsaturated fatty acids such as linoleic acid, linolenic acid, and the like. Moreover, examples of the saturated fatty acid include butyric acid, lauric acid, and the like.

Among them, as the above-described fatty acid, a fatty acid having few double bonds, that is, a saturated fatty acid or a monounsaturated fatty acid is desired, and oleic acid is preferable. As a vegetable oil comprising such fatty acid, for example, a vegetable oil comprising a saturated fatty acid or a monounsaturated fatty acid or a vegetable oil refined by transesterification or the like may be used. Moreover, in order to produce a vegetable oil comprising such fatty acid, a plant may be improved by selective breeding, gene recombination, genome editing, or the like.

As a vegetable oil, for example, those commercially available from Idemitsu Kosan Co., Ltd., Sankyo Yuka Kogyo K. K., ENEOS Corporation, Olisoy, H&R Group, HOKOKU Corporation, Fuji Kosan Co., Ltd., The Nisshin Oillio Group, etc. can be used.

Examples of the animal oils include fish oils, beef tallow, oleyl alcohol derived therefrom, and the like.

A content of oil based on 100 parts by mass of the rubber component is preferably greater than 1 part by mass, more preferably greater than 2 parts by mass, further preferably 3 parts by mass or more, further preferably 5 parts by mass or more. Moreover, the content is preferably less than 30 parts by mass, more preferably less than 20 parts by mass, further preferably less than 10 parts by mass. Besides, the content of oil shall also include an amount of oil contained as an extending oil in a rubber component or oil contained in another component such as sulfur and the like.

<<Liquid rubber>>

The liquid rubber is not particularly limited as long as it is a polymer in a liquid state at 25°C, examples of which include, for example, a liquid butadiene rubber (liquid BR), a liquid styrene-butadiene rubber (liquid SBR), a liquid isoprene rubber (liquid IR), a liquid styrene-isoprene rubber (liquid SIR), a liquid farnesene rubber, and the like. The liquid rubber may be used alone, or two or more thereof may be used in combination.

<<Ester-based plasticizing agent>>

Examples of the ester-based plasticizing agent include, for example, dibutyl adipate (DBA), diisobutyl adipate

(DIBA), dioctyl adipate (DOA), di(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. The ester-based plasticizing agents may be used alone, or two or more thereof may be used in combination.

<<Processing aid>>

Examples of processing aid include, for example, a fatty acid metal salt, a fatty acid amide, an amide ester, a silica surfactant, a mixture of a fatty acid metal salt and an amide ester, a mixture of a fatty acid metal salt and a fatty acid amide, and the like. As processing aid, for example, those commercially available from Schill+Seilacher GmbH, Performance Additives, etc. can be used. The processing aid may be used alone, or two or more thereof may be used in combination.

A content of processing aid when compounded based on 100 parts by mass of the rubber component is preferably greater than 0.5 parts by mass, more preferably greater than 1 part by mass, further preferably greater than 1.5 parts by mass, from the viewpoint of exerting an effect of improving processability. Moreover, it is preferably less than 10 parts by mass, more preferably less than 8.0 parts by mass, further preferably less than 5.0 parts by mass, from the viewpoints of abrasion resistance and breaking strength.

<<Vulcanized rubber particle>>

The vulcanized rubber particle is a particle made of a vulcanized rubber. Specifically, a rubber powder specified in JIS K 6316:2017, and the like can be used. A recycled rubber powder produced from a pulverized product of a waste tire and the like is preferable from the viewpoints of consideration for environment and cost. The vulcanized rubber particle may be used alone, or two or more thereof may be used in combination.

<<Wax>>

Wax is not particularly limited, and any of those commonly used in the tire industry can be appropriately used, examples of which include, for example, a mineral-based wax, a plant-derived wax, and the like. The mineral-based wax refers to a wax derived from mineral resources such as oil, natural gas, and the like. The plant-derived wax refers to a wax derived from natural resources such as plants. Among them, the mineral-based wax is preferable. Examples of the plant-derived wax include, for example, a rice bran wax, a carnauba wax, a candelilla wax, and the like. Examples of the mineral-based wax include, for example, a paraffin wax, a microcrystalline wax, a specially selected wax thereof, and the like, and the paraffin wax is preferable. Besides, the wax relating to the present embodiment shall not include stearic acid. As wax, for example, those commercially available from Ouchi Shinko Chemical Industry Co., Nippon Seiro Co., Ltd., PARAMELT, etc. can be used. The wax may be used alone, or two or more thereof may be used in combination.

A content of wax when compounded based on 100 parts by mass of the rubber component is preferably greater than 0.3 parts by mass, more preferably greater than 0.7 parts by mass, further preferably greater than 1.0 parts by mass. On the other hand, the content is preferably less than 4.0 parts by mass, more preferably less than 3.0 parts by mass, further preferably less than 2.5 parts by mass.

<<Stearic acid>>

A content of stearic acid when compounded based on 100 parts by mass of the rubber component is preferably greater than 0.5 parts by mass, more preferably greater than 0.7 parts by mass, further preferably 1.0 parts by mass or more, from the viewpoint of processability. On the other hand, the content is preferably less than 10 parts by mass, more preferably less than 5 parts by mass, further preferably less than 3 parts by mass, from the viewpoint of vulcanization rate.

<<Zinc oxide>>

A content of zinc oxide when compounded based on 100 parts by mass of the rubber component is preferably greater than 0.5 parts by mass, more preferably greater than 0.7 parts by mass, further preferably 1 part by mass or more, from the viewpoint of processability. On the other hand, the content is preferably less than 10 parts by mass, more preferably less than 5 parts by mass, further preferably less than 3 parts by mass, from the viewpoint of abrasion resistance.

<<Antioxidant>>

Examples of the antioxidant include, but not particularly limited to, a naphthylamine-based antioxidant such as phenyl-α-naphthylamine and the like; a diphenylamine-based antioxidant such as octylated diphenylamine, 4,4'-bis(α,α'-dimethylbenzyl)diphenylamine, and the like; a p-phenylenediamine-based antioxidant such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), N,N'-di-2-naphthyl-p-phenylenediamine (DNPD), and the like; a quinoline-based antioxidant such as a polymer of 2,2,4-trimethyl-1,2-dihydroquinoline and the like; a monophenol-based antioxidant such as 2,6-di-t-butyl-4-methylphenol, styrenated phenol, and the like; bisphenol-based, trisphenol-based, or polyphenol-based antioxidants such as tetrakis-[methylene-3-(3',5'-di-t-butyl-4'-hydroxyphenyl) propionate]methane and the like; and the like. Among them, the p-phenylenediamine-based antioxidant and the quinoline-based antioxidant are preferable, and N-(1,3-dimethylbutyl)-N'-phenyl-p-phenylenediamine and a polymer of 2,2,4-trimethyl-1,2-dihydroquinoline are more preferable. As the commercially-available product, for example, products manufactured by Seiko Chemical Co., Ltd., Sumitomo Chemical Co., Ouchi Shinko Chemical Industry Co., Flexsys, etc. can be used. The antioxidant may be used alone, or two or more thereof may be used in combination.

A content of an antioxidant when compounded based on 100 parts by mass of the rubber component is preferably greater than 0.5 parts by mass, more preferably greater than 0.8 parts by mass, further preferably greater than 1.0 parts by mass. On the other hand, the content is preferably less than 7.0 parts by mass, more preferably less than 5.0 parts by mass, further preferably 3.0 parts by mass or less.

<<Vulcanizing agent>>

A vulcanizing agent is not particularly limited, and known vulcanizing agents can be used, examples of which include, for example, organic peroxide, a sulfur-based vulcanizing agent, a resin vulcanizing agent, metallic oxide such as magnesium oxide and the like, etc. Among them, the sulfur-based vulcanizing agent is preferable. As the sulfur-based vulcanizing agent, for example, sulfur donors such as sulfur, morpholine disulfide, and the like, etc. can be used. Among them, it is preferable that sulfur is used. The vulcanizing agent can be used alone, or two or more thereof can be used in combination.

Examples of sulfur include a powdery sulfur, a precipitated sulfur, a colloidal sulfur, a surface-treated sulfur (an oil processing sulfur, a special sulfur treated with a dispersing agent, a masterbatch-type sulfur, and the like), an insoluble sulfur (an oil processing insoluble sulfur and the like), and the like, and any of them can be appropriately used. Among them, the powdery sulfur is preferable. As sulfur, for example, those manufactured and sold by Tsurumi Chemical Industry Co., ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc., and the like can be used.

A known organic crosslinking agent can also be used as a vulcanizing agent. Although the organic crosslinking agent is not particularly limited as long as it can form a crosslinking chain other than polysulfide bond, examples of the organic crosslinking agent include, for example, an alkylphenol-sulfur chloride condensate, sodium hexamethylene-1,6-bisthiosulfate dihydrate, 1,6-bis(N,N'-dibenzylthiocarbamoyldithio)hexane, dicumyl peroxide, and the like, and 1,6-bis(N,N'-dibenzylthiocarbamoyldithio)hexane is preferable. As these organic crosslinking agents, those commercially available from Taoka Chemical Co., Ltd., LANXESS, Flexsys, etc. can be used.

A content of a vulcanizing agent when compounded based on 100 parts by mass of the rubber component is preferably greater than 0.4 parts by mass, more preferably 0.5 parts by mass or more, further preferably 1.0 parts by mass or more. On the other hand, the content is preferably less than 6.0 parts by mass, more preferably less than 4.0 parts by mass, further preferably less than 2.0 parts by mass. When the content of the vulcanizing agent is within the above-described ranges, an appropriate reinforcing effect tends to be obtained. Besides, in a case where the vulcanizing agent includes a component other than sulfur like an oil-processing sulfur and the like, the content of the vulcanizing agent means a content of a sulfur component itself.

<<Vulcanization accelerator>>

A vulcanization accelerator is not particularly limited, and known vulcanization accelerators can be used, examples of which include, for example, sulfenamide-based, thiazole-based, thiuram-based, thiourea-based, guanidine-based, dithiocarbamic acid-based, aldehyde-amine-based or aldehyde-ammonia-based, imidazoline-based, and xanthate-based vulcanization accelerators, and the like. Among them, the thiazole-based vulcanization accelerator, the sulfenamide-based vulcanization accelerator, the thiuram-based vulcanization accelerator, and the guanidine-based vulcanization accelerator are preferable, the thiazole-based vulcanization accelerator and the sulfenamide-based vulcanization accelerator are more preferable, and the thiazole-based vulcanization accelerator is further preferable.

As the vulcanization accelerator, for example, those manufactured and sold by Ouchi Shinko Chemical Industry Co., Ltd., Sanshin Chemical Industry Co., Ltd., etc., and the like can be used. The vulcanization accelerators may be used alone, or two or more thereof may be used in combination.

Examples of the sulfenamide-based vulcanization accelerator include, for example, N-tert-butyl-2-benzothiazolyl sulfenamide (TBBS), N-cyclohexyl-2-benzothiazolyl sulfenamide (CBS), N,N-dicyclohexyl-2-benzothiazolyl sulfenamide (DCBS), and the like. Examples of the thiazole-based vulcanization accelerator include, for example, 2-mercaptobenzothiazole (MBT) or salt thereof, di-2-benzothiazolyl disulfide (MBTS), 2-(2,4-dinitrophenyl)mercaptobenzothiazole, 2-(2,6-diethyl-4-morpholinothio)benzothiazole, and the like. Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatechol borate, 1,3-di-o-cumenyl guanidine, 1,3-di-o-biphenyl guanidine, 1,3-di-o-cumenyl-2-propionyl guanidine, and the like. Examples of the thiuram-based vulcanization accelerator include, for example, tetrakis(2-ethylhexyl) thiuram disulfide (TOT-N), tetramethylthiuram disulfide (TMTD), tetraethylthiuram disulfide, tetramethylthiuram monosulfide (TMTM), dipentamethylenethiuram disulfide, dipentamethylenethiuram tetrasulfide, and the like.

Moreover, examples of the thiourea-based vulcanization accelerator include, for example, a thiourea compound such as thiocarbamide, diethylthiourea, dibutylthiourea, trimethylthiourea, diorthotolylthiourea, and the like; N, N'-diphenylthiourea; trimethylthiourea; N,N'-diethylthioure; and the like. Examples of the dithiocarbamic acid salt-based vulcanization accelerator include, for example, piperidinium pentamethylenedithiocarbamate (PPDC), zinc dimethyldithiocarbamate (ZnMDC), zinc diethyldithiocarbamate (ZnEDC), zinc dibutyldithiocarbamate (ZnBDC), zinc dibenzyldithiocarbamate (ZDBzC), zinc N-ethyl-N-phenyl dithiocarbamate (ZnEPDC), zinc N-pentamethylene dithiocarbamate (ZnPDC), sodium dibutyldithiocarbamate (NaBDC), copper dimethyldithiocarbamate (CuMDC), ferric dimethyldithiocarbamate (FeMDC), tellurium diethyldithiocarbamate (TeEDC), and the like.

A content of a vulcanization accelerator based on 100 parts by mass of the rubber component is preferably greater than 0.3 parts by mass, more preferably greater than 0.5 parts by mass, further preferably 1.0 parts by mass or more. On the other hand, the content is preferably less than 8.0 parts by mass, more preferably less than 7.0 parts by mass, further preferably less than 6.0 parts by mass. When the content of the vulcanization accelerator is within the above-described ranges, breaking strength and elongation tend to be secured.

<Rubber composition constituting internal member>

A rubber composition constituting an internal member can be produced by a conventional method. That is, the present rubber composition can be obtained by kneading a rubber component and compounding agents. The explanation made for the rubber composition constituting the belt toping rubber can similarly apply to these rubber component and compounding agents. Among internal members, particularly regarding an inner liner and an insulation, the explanation of rubber compositions constituting them is as follows.

<Rubber composition constituting inner liner>

A rubber composition constituting an inner liner will be described. Moreover, in the present specification, the rubber composition constituting the inner liner may also be referred to as a "rubber composition for inner liner".

(Rubber component)

A rubber component preferably comprises a butyl-based rubber.

<<Butyl-based rubber>>

Examples of butyl-based rubbers include, for example, a non-halogenated butyl rubber (regular butyl rubber, IIR); a halogenated butyl rubber (X-IIR) such as a brominated butyl rubber (Br-IIR), chlorinated butyl rubber (CI-IIR) and the like; a copolymer of isobutylene and p-alkyl styrene; and the like. Among them, a halogenated butyl rubber is preferable and a brominated butyl rubber and a chlorinated butyl rubber are more preferable, from the viewpoint that sheet processability and air barrier property can be improved with good balance and from the viewpoint of the effects of the present invention. The butyl-based rubbers may be used alone, or two or more thereof may be used in combination.

Examples of p-alkyl styrene constituting the copolymer of isobutylene and p-alkyl styrene include, for example, p-methylstyrene and the like. The copolymer of isobutylene and p-alkyl styrene may be halogenated. A site to be halogenated may be an isobutylene unit or a p-alkyl styrene unit, preferably a p-alkyl styrene unit, more preferably an alkyl group of the p-alkyl styrene unit.

As the butyl-based rubbers, in addition to a usual butyl-based rubber (a butyl-based rubber other than recycled butyl-based rubbers), a recycled butyl-based rubber can be used in combination. For a recycled butyl-based rubber, since

a content rate of a non-halogenated butyl rubber (regular butyl rubber) is usually high, a good air barrier property and a good vulcanization rate can be secured by using the recycled butyl-based rubber in combination with a halogenated butyl rubber. The recycled butyl-based rubbers may be used alone, or two or more thereof may be used in combination.

As a butyl-based rubber, for example, products from Exxon Mobil Corporation, ENEOS Materials Corporation, ARLANXEO, JSR Corporation, Japan Butyl Co., Ltd., etc. can be used.

<<Content of butyl-based rubber>>

A content of a butyl-based rubber in 100% by mass of the rubber component is preferably 70% by mass or more, more preferably 75% by mass or more, further preferably 80% by mass or more, further preferably 85% by mass or more, further preferably 90% by mass or more, from the viewpoint of a sufficient air barrier property. The content of the butyl-based rubber may be 100% by mass. On the other hand, the content can be, but not particularly limited to, for example, 100% by mass or less, less than 100% by mass, less than 97% by mass, less than 95% by mass, less than 93% by mass, or 91% by mass or less, from the viewpoint of compatibility of a sufficient air barrier property with moldability.

<<Other rubber components>>

Examples of rubber components other than butyl-based rubbers include, for example, a diene-based rubber, such as an isoprene-based rubber (IR-based rubber), a butadiene rubber (BR), a styrene- butadiene rubber (SBR), a styrene-isoprene-butadiene rubber (SIBR), a chloroprene rubber (CR), an acrylonitrile-butadiene rubber (NBR), a polynorbornene rubber, and the like; and a non-diene-based rubber, such as a hydrogenated nitrile rubber (HNBR), an ethylene propylene rubber, a silicone rubber, a polyethylene chloride rubber, a fluororubber (FKM), an acrylic rubber (ACM), a hydrin rubber, and the like. Among them, the diene-based rubbers are preferable, and the isoprene-based rubber among them is preferable from the viewpoints of the improvements of stickiness and adhesiveness to an adjacent tire member, and the like. The other rubber components may be used alone, or two or more thereof may be used in combination.

Examples of the isoprene-based rubber include an isoprene rubber (IR), a natural rubber (NR), a modified natural rubber, and the like, and among them, an NR is preferable. Examples of the modified natural rubber include an epoxidized natural rubber (ENR), a hydrogenated natural rubber (HNR), a grafted natural rubber, and the like. Moreover, as an NR, for example, those common in the tire industry can be used, such as SIR20, RSS#3, TSR20, and the like.

A content of another rubber component when compounded in 100% by mass of the rubber component can be, for example, greater than 1% by mass, preferably greater than 3% by mass, more preferably greater than 5% by mass, further preferably greater than 8% by mass, further preferably 10% by mass or more, from the viewpoint of moldability. On the other hand, the content can be 30% by mass or less, preferably 25% by mass or less, more preferably 20% by mass or less, further preferably 15% by mass or less, from the viewpoint of air permeation resistance.

(Water permeation-suppressing filler)

Examples of a water permeation-suppressing filler include a plate-shaped clay mineral, a recovered carbon black, a rubber powder, and the like. The plate-shaped clay mineral may not be shaped like a complete plate, and for example, may be curved or twisted partially or as a whole.

Examples of the plate-shaped clay mineral can include, for example, kaolin, serpentine, pyrophyllite, talc, mica, chlorite, smectite, vermiculite, and the like. More specifically, the examples can include kaolinite, dickite, nacrite, halloysite, chrysotile, lizardite, antigorite, pyrophyllite, talc, kerolite, williamsite, pimelite, minnesotaite, mica, clinochlore (Mg chlorite), FeMg chlorite, chamosite (Fe chlorite), nimite, bentontite, donbassite, sudoite, cookeite, montmorillonite, beidellite, nontronite, saponite, hectorite, stevensite, and the like. These may be used alone, or two or more thereof may be used in combination.

It is preferable that a ratio of a particle size to a thickness of a water permeation-suppressing filler (which also is referred to as an "aspect ratio" hereinafter) is within a predetermined range. For example, for a water permeation-suppressing filler, an average aspect ratio is preferably 3 or more, more preferably 6 or more, further preferably 10 or more, from the viewpoint of the effects of the present invention. On the other hand, an upper limit of the average aspect ratio is not particularly limited and is, for example, 1000 or less.

An average particle size of a water permeation-suppressing filler is preferably 0.5 μm or more, more preferably 1 μm or more, further preferably 5 μm or more, from the viewpoint of improving water permeation suppressibility. On the other hand, the average particle size is preferably 1000 μm or less, more preferably 500 μm or less, further preferably 100 μm or less.

An average thickness of a water permeation-suppressing filler is preferably 100 μm or less, more preferably 50 μm or less, from the viewpoint that an aspect ratio does not become too low.

The average thickness, average particle size, and average aspect ratio of a water permeation-suppressing filler can be calculated by microscopic observation. Specifically, each of them can be calculated as an average value for arbitrary 100 pieces in the field of view.

Moreover, in the present embodiment, recovered carbon black or a rubber powder can be used as a water permeation-suppressing filler.

The explanation made for the recovered carbon black in the rubber composition for belt toping rubber is similarly applicable to the recovered carbon black as a water permeation-suppressing filler of the rubber composition for inner liner.

The explanation made for the vulcanized rubber particle of the rubber composition for belt toping rubber is similarly applicable to the rubber powder of the rubber composition for inner liner.

The water permeation-suppressing filler is preferably at least one selected from kaolin, talc, mice, a recovered carbon black, and a rubber powder.

<<Content B of water permeation-suppressing filler>>

A content B of a water permeation-suppressing filler is preferably greater than 5 parts by mass, more preferably greater than 8 parts by mass, further preferably 10 parts by mass or more, further preferably 20 parts by mass or more, based on 100 parts by mass of resin, from the viewpoint of improving water permeation suppressibility. On the other hand, the content is more preferably 90 parts by mass or less, more preferably 80 parts by mass or less, further preferably 70 parts by mass or less, further preferably 60 parts by mass or less.

(Filler)

The present rubber composition preferably comprises a filler. The filler can comprise carbon black or silica. It preferably comprises carbon black. In a case where the filler comprises silica, the filler can further comprise a silane coupling agent. The filler can further comprise another filler other than carbon black and silica. The explanation of the respective components that can constitute the filler is as follows, and additionally, the explanation made for the components of the rubber composition constituting the belt toping rubber is similarly applicable to these respective components.

<<Content C of carbon black>>

A content C of carbon black is, for example, greater than 20 parts by mass, preferably 30 parts by mass or more, more preferably 35 parts by mass or more, further preferably 40 parts by mass or more, based on 100 parts by mass of the rubber component. On the other hand, the content is preferably less than 80 parts by mass, more preferably less than 60 parts by mass, further preferably less than 50 parts by mass, further preferably 45 parts by mass or less. When the content of carbon black is within the above-described ranges, sufficient reinforcing property tends to be obtained.

The explanation made for the carbon black in the rubber composition constituting the belt toping rubber is similarly applicable to the other matters of carbon black in the rubber composition for inner liner.

(Other compounding agents)

The rubber composition for inner liner preferably comprises a compatibilizer. Moreover, it preferably comprises a phenol-based resin.

<<Compatibilizer>>

Although the explanation of the compatibilizer is similar to the explanation made for the rubber composition for belt toping rubber, as a compatibilizer used for the present rubber composition, for example, an ethylene-propylene-styrene copolymer, a styrene-ethylene-butadiene block copolymer, a styrene-methyl methacrylate block copolymer, an ethylene-styrene graft copolymer, a styrene-maleic anhydride copolymer, an ethylene-glycidyl methacrylate copolymer, a styrene graft copolymer to an ethylene-glycidyl methacrylate copolymer, and the like is appropriately used, and among them, an ethylene-propylene-styrene copolymer is preferable. When the present rubber composition comprises a compatibilizer, it suppresses water permeation suppressibility and can also suppress formation of a large air gap.

Although a content of a compatibilizer is not particularly limited, it is, for example, preferably greater than 2 parts by mass, more preferably greater than 3 parts by mass, further preferably greater than 4 parts by mass, based on 100 parts by mass of the rubber component, considering water permeation suppressibility. On the other hand, it is preferably less than 15 parts by mass, more preferably less than 12 parts by mass, further preferably less than 10 parts by mass.

<<Phenol-based resin>>

The rubber composition for inner liner preferably comprises a phenol-based resin. The explanation made for the phenol-based resin in the rubber composition constituting the belt toping rubber is similarly applicable to the phenol-based resin for the rubber composition for inner liner. When the rubber composition comprises a phenol-based resin, it is considered that adhesiveness to other tire members is improved.

A content of a phenol-based resin is preferably 0.5 parts by mass or more, more preferably 2 parts by mass or more, further preferably 3 parts by mass or more, based on 100 parts by mass of the rubber component. On the other hand, it is preferably 10 parts by mass or less, more preferably 8 parts by mass or less, further preferably 6 parts by mass or less.

The explanation made for the rubber composition constituting the belt toping rubber is similarly applicable to compounding agents other than the above-described compounding agents of the rubber composition for inner liner.

<Rubber composition constituting insulation>

Respective components of a rubber composition constituting an insulation will be described. Moreover, in the present specification, the rubber composition constituting the insulation may also be referred to as a "rubber composition for insulation".

(Rubber component)

The explanation of a rubber component is as follows and additionally, the explanation made for the rubber component of the rubber composition constituting the belt toping rubber is similarly applicable to the rubber component of the rubber composition for insulation. The rubber composition constituting the insulation comprises a rubber component comprising at least one selected from an isoprene-based rubber (IR-based rubber), a styrene-butadiene rubber (SBR), and a butadiene rubber (BR). In this case, the rubber component can comprise a rubber component other than an IR-based rubber, an SBR, and a BR. Moreover, the rubber component may be one consisting of an IR-based rubber, an SBR, and a BR.

A content rate of an IR-based rubber in 100% by mass of the rubber component is, for example, greater than 20% by mass, preferably greater than 30% by mass, more preferably greater than 40% by mass, further preferably 50% by mass or more. On the other hand, the content is, for example, 100% by mass or less, preferably less than 90% by mass, more preferably less than 80% by mass.

A content rate of a BR when compounded in 100% by mass of the rubber component is, for example, greater than 5% by mass, preferably greater than 10% by mass, more preferably greater than 20% by mass, further preferably greater than 25% by mass. On the other hand, the content is, for example, 100% by mass or less, preferably less than 90% by mass, more preferably less than 80% by mass.

A content rate of an SBR when compounded in 100% by mass of the rubber component is, for example, greater than 5% by mass, preferably greater than 10% by mass, more preferably greater than 20% by mass, further preferably greater than 25% by mass. On the other hand, the content is, for example, 100% by mass or less, preferably less than 90% by mass, more preferably less than 80% by mass.

<Water permeation-suppressing filler>

The present rubber composition comprises a water permeation-suppressing filler. The explanation made for the water-suppressing filler of the rubber composition constituting the inner liner is similarly applicable to the water permeation-suppressing filler of the rubber composition for insulation.

<Filler>

A filler can comprise carbon black (CB) or silica. It preferably comprises carbon black. Carbon black may comprise a recovered carbon black. In a case where the filler comprises silica, the filler can further comprise a silane coupling agent. The filler can further comprise another filler other than carbon black and silica. The explanation made for the filler of the rubber composition constituting the belt toping rubber is similarly applicable to the respective components that can constitute the filler of the rubber composition for insulation.

<Compatibilizer>

The rubber composition for insulation preferably comprises a compatibilizer. The explanation made for the compatibilizer of the rubber composition constituting the inner liner is similarly applicable to the compatibilizer of the rubber

composition for insulation.

<Phenol-based resin>

The rubber composition for insulation preferably comprises a phenol-based resin. The explanation made for the phenol-based resin of the rubber composition constituting the inner liner is similarly applicable to the phenol-based resin of the rubber composition for insulation.

The explanation made for the rubber composition constituting the belt toping rubber is similarly applicable to compounding agents other than the above-described compounding agents of the rubber composition for insulation.

In the present specification, various materials each having a carbon atom (for example, a rubber, oil, resin, a vulcanization accelerator, an antioxidant, a surfactant, and the like) may be derived from carbon dioxide in the atmosphere. The compounds relating to the present embodiment can be obtained by converting carbon dioxide directly or converting methane obtained via a process of methanation by which methane is synthesized from carbon dioxide.

<Production>

Any of the rubber compositions relating to the present embodiment can be produced by a known method. For example, it can be produced by kneading the respective above-described components with a rubber kneading machine such as an open roll, a sealed type kneader (a Bunbury mixer, a kneader, and the like), and the like.

(Production of rubber compositions for belt topping rubber and for internal member)

The rubber compositions can be produced by a known method. For example, they can be produced by kneading the respective above-described components with a rubber kneading machine such as an open roll, a sealed type kneader (a Bunbury mixer, a kneader, and the like), and the like. The kneading step includes, for example, a base kneading step of kneading compounding agents and additives other than a vulcanizing agent and a vulcanization accelerator; and a final kneading (F-kneading) step of adding the vulcanizing agent and the vulcanization accelerator to the kneaded product obtained in the base kneading step and kneading them. Additionally, the base kneading step can be also divided into multiple steps as necessary. Examples of kneading conditions include, but not particularly limited to, for example, a method of kneading at a discharge temperature of 150°C to 170°C for 3 to 10 minutes in the base kneading step and kneading for 1 to 5 minutes in the final kneading step until a temperature reaches 50°C to 110°C.

(Production of belt ply and belt)

A belt ply can be produced by using a calender roll or the like to cover metal cords arranged at predetermined intervals with a rubber composition for belt topping rubber obtained as described above. Although material for the metal cord is not particularly limited, a steel cord is preferable. A belt is configured using one or two or more belt plies thus obtained.

The metal cord may be a single monofilament cord (that is, a cord having a 1×1 structure and consisting of one filament) or may have a plurality of filaments. In a case where one metal cord has a plurality of filaments, the metal cord preferably has a twist structure in which these filaments are twisted together along their longitudinal direction. The twist structure is not particularly limited, and can be, for example, a single-twist metal cord having a 1×N structure or a layer-twist metal cord having a K+M structure. Here, for example, N is an integer in the range of 1 to 27, K is an integer in the range of 1 to 10, M is an integer in the range of 1 to 3, and the like.

(Production of tire)

Each rubber composition obtained as described above is extruded into a desired shape of each of tire members at an unvulcanized stage, respectively, whereby unvulcanized internal members such as an inner liner, an insulation, and the like can be produced. The unvulcanized internal members such as the inner liner, the insulation, and the like, which are thus obtained, are attached together with the above-described obtained belt and other tire members on a tire molding machine by a usual method, thereby forming an unvulcanized tire. At this time, as necessary, the belt is configured to have a predetermined structure. The tire relating to the present embodiment can be produced by heating and pressurizing, in a vulcanizer, the unvulcanized tire thus obtained. Examples of a vulcanization condition include, but not particularly limited to, for example, a method of vulcanizing at 150 to 200°C for 10 to 40 minutes.

<Application>

The tire relating to the present embodiment can be used for any application, and can be used as a tire for a passenger car, a tire for a large passenger car, a tire for a large SUV, a racing tire, a motorcycle tire, a heavy-duty tire, or a run-flat tire. Besides, the tire for a passenger car refers to a tire that is presupposed to be mounted to a vehicle running with four wheels and that has a maximum load capacity of less than 1400 kg. Moreover, the heavy-duty tire refers to a tire having a maximum load capacity of 1400 kg or more. Moreover, in the present specification, the tire can be used as an all-season tire and a summer tire, as well as a winter tire such as a studless tire and the like.

EXAMPLE

Hereinafter, examples considered to be preferable in implementing the present invention (Examples) will be described, though the scope of the present invention is not limited to only these Examples. Results, which are calculated based on evaluation methods described below considering a tire having an inner liner, a belt, and a tire structure, the tire being obtained in accordance with each Tables using various chemicals described below, are shown in the lower part of each Table.

<Various chemicals>

Various chemicals used in Examples and Comparative examples are collectively shown below.

NR: TSR 20 (Natural rubber)
Butyl-based rubber: Bromobutyl 2222 manufactured by Exxon Mobil Chemical (brominated butyl rubber)
Carbon black 1 (CB1): SEAST V manufactured by TOKAI CARBON CO., LTD. ($N_2SA$: 27 $m^2/g$, primary particle size: 62 nm, ash content: 1.0% by mass or less)
Carbon black 2 (CB2): DIABLACK H manufactured by Mitsubishi Chemical Corporation (N330, $N_2SA$: 42 $m^2/g$, ash content: 1.0% by mass or less)
Water permeation-suppressing filler: Polyfil DL manufactured by KaMin LLC (kaolin, median particle size: 3.2 $\mu$m, BET specific surface area: 15 $m^2/g$)
Cobalt stearate: cost-F manufactured by DIC Corporation (cobalt content: 9.5% by mass)
Bismaleimide: BMI-1000 manufactured by Daiwakasei Industry Co.,LTD. (4,4'-Diphenylmethanebismaleimido)
Antioxidant: Nocrac RD manufactured by Ouchi Shinko Chemical Industry Co., Ltd. (poly(2,2,4-trimethyl-1,2-dihydroquinoline))
Stearic acid: Bead stearic acid "CAMELLIA" manufactured by NOF CORPORATION
Resin: Durez19900 manufactured by SUMITOMO BAKELITE CO., LTD. (solid novolac phenol resin, softening point: 90°C)
Compatibilizer: Promix 400 manufactured by Flow Polymers Inc. (ethylene-propylene-styrene copolymer)
Zinc oxide: Zinc oxide No. 1 manufactured by Ouchi Shinko Chemical Industry Co., Ltd.
Oil: Diana process NH-70S manufactured by Idemitsu Kosan Co., Ltd (aromatic process oil)
Sulfur 1: HK-200-5 manufactured by Hosoi Chemical Industry Co., Ltd. (oil content: 5% by mass)
Sulfue 2: M95 manufactured by NIPPON KANRYU INDUSTRY CO., LTD. (oil content: 20% by mass)
Vulcanization accelerator 1: Nocceler DM-P manufactured by Ouchi Shinko Chemical Industry Co., Ltd. (benzothiazole disulfide)
Vulcanization accelerator 2: Nocceler NS manufactured by Ouchi Shinko Chemical Industry Co., Ltd. (N-t-butyl-2-benzothiazolyl disulfenamide)

<Examples and Comparative examples>

According to compounding formulations shown in Table 1, using a 1.7 L Banbury mixer, chemicals other than sulfur and a vulcanization accelerator are kneaded for 5 minutes until a temperature reaches a discharge temperature at 160°C to obtain a kneaded product. Next, the sulfur and vulcanization accelerator are added to the obtained kneaded product, and the mixture is kneaded using a twin-screw open roll for 4 minutes until the temperature reaches 105°C to obtain an unvulcanized rubber composition for belt topping rubber. A steel cord (filament diameter: 0.30 mm) is covered with the obtained unvulcamized rubber composition, thereby obtaining a steel cord-rubber complex.
According to compounding formulations shown in Table 1, using a 1.7 L Banbury mixer, chemicals other than sulfur and a vulcanization accelerator are kneaded for 5 minutes until a temperature reaches a discharge temperature at 130°C to obtain a kneaded product. Next, the sulfur and vulcanization accelerator are added to the obtained kneaded product, and the mixture is kneaded using a twin-screw open roll for 4 minutes until the temperature reaches 105°C to

obtain an unvulcanized rubber composition for inner liner. The obtained unvulcanized rubber composition is extruded into a shape of an inner liner with an extruder equipped with a mouthpiece having a predetermined shape, thereby obtaining an unvulcanized inner liner member.

One obtained steel cord-rubber complex is used as a belt ply and is attached together with the unvulcanized inner liner member and other tire members, to prepare an unvulcanized tire. The unvulcanized tire is press-vulcanized under a condition at 160°C for 20 minutes, thereby producing each test tire (tire size: 195/65R15).

<Peeling-off resistive force>

Each test tire is immersed in normal temperature water for 300 hours to be deteriorated. A belt together with a steel cord and a topping rubber is cut out from the deteriorated tire to have a width of 25 mm and a length of 200 mm. The prepared sample is subjected to a 90-degree peeling test at a tensile speed of 100 mm/min in accordance with JIS K 6854 to measure a peeling-off resistive force, in N. Measured peeling-off resistive forces are indicated as an index with a peeling-off resistive force for Comparative example 4 being as 100. The results show that the higher the index is, the more excellent the suppression of peeling is.

Table 1

| | Example | | | | Comparative example | | | |
|---|---|---|---|---|---|---|---|---|
| | 1 | 2 | 3 | 4 | 1 | 2 | 3 | 4 |
| Compounding for inner liner | | | | | | | | |
| Butyl-based rubber | 100 | 100 | 100 | 100 | 100 | 100 | 100 | 100 |
| CB1 | 50 | 40 | 30 | 30 | 60 | 60 | 50 | 56 |
| Water permeation-suppressing filler | 10 | 20 | 30 | 30 | 0 | 0 | 10 | 4 |
| Stearic acid | 1 | 1 | 1 | 1 | 1 | 1 | 1 | 1 |
| Zinc oxide | 1 | 1 | 1 | 1 | 1 | 1 | 1 | 1 |
| Oil | 1.5 | 1.5 | 1.5 | 1.5 | 1.5 | 1.5 | 1.5 | 1.5 |
| Resin | 1.5 | 1.5 | 1.5 | 1.5 | 1.5 | 1.5 | 1.5 | 1.5 |
| Compatibilizer | 4.81 | 4.81 | 4.81 | 4.81 | 4.81 | 4.81 | 4.81 | 4.81 |
| Sulfur 1 | 0.53 | 0.53 | 0.53 | 0.53 | 0.53 | 0.53 | 0.53 | 0.53 |
| Vulcanization accelerator 1 | 1.25 | 1.25 | 1.25 | 1.25 | 1.25 | 1.25 | 1.25 | 1.25 |
| Compounding for belt | | | | | | | | |
| NR | 100 | 100 | 100 | 100 | 100 | 100 | 100 | 100 |
| CB2 | 52 | 52 | 52 | 52 | 52 | 52 | 52 | 52 |
| Cobalt stearate | 0 | 0 | 0 | 0.2 | 0.4 | 0 | 0.4 | 0 |
| Bismaleimide | 2 | 2 | 2 | 2 | 2 | 2 | 2 | 2 |
| Antioxidant | 0.7 | 0.7 | 0.7 | 0.7 | 0.7 | 0.7 | 0.7 | 0.7 |
| Zinc oxide | 7.5 | 7.5 | 7.5 | 7.5 | 7.5 | 7.5 | 7.5 | 7.5 |
| Stearic acid | 1.3 | 1.3 | 1.3 | 1.3 | 1.3 | 1.3 | 1.3 | 1.3 |
| Oil | 1.5 | 1.5 | 1.5 | 1.5 | 1.5 | 1.5 | 1.5 | 1.5 |
| Sulfur 2 | 6 | 6 | 6 | 6 | 6 | 6 | 6 | 6 |
| | Example | | | | Comparative example | | | |
| | 1 | 2 | 3 | 4 | 1 | 2 | 3 | 4 |
| Compounding for belt | | | | | | | | |
| Vulcanization accelerator 2 | 1 | 1 | 1 | 1 | 1 | 1 | 1 | 1 |
| Cobalt amount (A: parts by mass) | 0 | 0 | 0 | 0.019 | 0.038 | 0 | 0.038 | 0 |
| B/(A+5) (Inequality (1)) | 2 | 4 | 6 | 5.98 | 0 | 0 | 1.99 | 0.8 |
| Thickness L of inner liner (mm) | 1.0 | 1.0 | 1.0 | 1.0 | 1.0 | 1.0 | 1.0 | 1.0 |
| Thickness T of belt (mm) | 1.0 | 1.0 | 1.0 | 1.0 | 1.0 | 1.0 | 1.0 | 1.0 |
| T×L×B (Inequality (2)) | 10 | 20 | 30 | 30 | 0 | 0 | 10 | 4 |

(continued)

| | Example | | | | Comparative example | | | |
|---|---|---|---|---|---|---|---|---|
| | 1 | 2 | 3 | 4 | 1 | 2 | 3 | 4 |
| Compounding for belt | | | | | | | | |
| B/(B+C)×L (Inequality (3)) | 0.167 | 0.333 | 0.500 | 0.500 | 0 | 0 | 0.167 | 0.067 |
| (A+E)/T (Inequality (4)) | 2.00 | 2.00 | 2.00 | 2.02 | 2.04 | 2.00 | 2.04 | 2.00 |
| Peeling-off resistive force index | 103 | 105 | 109 | 109 | 98 | 98 | 99 | 100 |

REFERENCE SIGNS LIST

1. Tire
2. Cap tread
3. Base tread
4. Band
5. Belt
6. Carcass
7. Insulation
8. Inner liner

CL. Tire center line
$L_1$. Thickness of inner liner
T. Thickness of belt

## Claims

**1.** A tire comprising a belt, and an internal member arranged on the inner side of the belt in a tire radial direction,

the belt comprising at least one belt ply that has a metal cord and a topping rubber covering the metal cord,
wherein A is 0.03 parts by mass or less, where A represents a cobalt content, in parts by mass, based on 100 parts by mass of a rubber component in a rubber composition constituting the topping rubber,
wherein the internal member is composed of a rubber composition comprising a water permeation-suppressing filler, and
wherein A and B satisfy the following inequality (1), preferably the right side in the inequality (1) being 1.5, more preferably 2,

$$(1)\ B/(A+5) > 1,$$

where B represents a content, in parts by mass, of the water permeation-suppressing filler based on 100 parts by mass of a rubber component in the rubber composition constituting the internal member.

**2.** The tire of claim 1, wherein the right side in the inequality (1) is 3, preferably 4.

**3.** The tire of claim 1, wherein the right side in the inequality (1) is 5.

**4.** The tire of any one of claims 1 to 3, wherein T, L, and B satisfy the following inequality (2),

$$(2)\ T\times L\times B > 10,$$

where T represents a thickness, in mm, of the belt and L represents a thickness, in mm, of the internal member.

**5.** The tire of any one of claim 4, wherein the right side in the inequality (2) is 20, preferably 30, more preferably 50.

**6.** The tire of any one of claims 1 to 5, wherein the rubber composition constituting the internal member comprises a rubber component comprising a butyl-based rubber.

**7.** The tire of any one of claims 1 to 6, wherein the rubber composition constituting the topping rubber comprises a rubber component comprising an isoprene-based rubber.

**8.** The tire of any one of claims 1 to 7,

wherein the rubber composition constituting the internal member comprises a butyl-based rubber and a water permeation-suppressing filler,
where a content of the butyl-based rubber is 70% by mass or more, preferably 75% by mass or more, more preferably 80% by mass or more, further preferably 85% by mass or more, further preferably 90% by mass or more of a butyl-based rubber, and 100% by mass or less, preferably less than 100% by mass, more preferably less than 97% by mass, further preferably less than 95% by mass, further preferably less than 93% by mass, further preferably 91% by mass or less, in 100% by mass of the rubber component, and
where a content of the water permeation-suppressing filer is 10 parts by mass or more, preferably 20 parts by mass or more, and 70 parts by mass or less, preferably 60 parts by mass or less, based on 100 parts by mass of the rubber component.

**9.** The tire of any one of claims 1 to 8,

wherein the rubber composition constituting the topping rubber comprises an isoprene-based rubber whose content is 80% by mass or more, preferably 90% by mass or more, and 100% by mass or less, in 100% by mass of the rubber component, and
wherein A is 0.02 parts by mass or less, preferably 0.01 parts by mass or less.

**10.** The tire of any one of claims 1 to 9, wherein B, C, and L satisfy the following inequality (3), preferably the right side in the inequality (3) being 0.8, more preferably 0.6, further preferably 0.5,

$$(3)\ B/(B+C) \times L < 1,$$

where C represents a content, in parts by mass, of carbon black based on 100 parts by mass of the rubber component in the rubber composition constituting the internal member.

**11.** The tire of any one of claims 1 to 10,

wherein the rubber composition constituting the topping rubber comprises a bismaleimide compound, and
wherein A, E, and T satisfy the following inequality (4), preferably the right side in the inequality (4) being 1.2, more preferably 1.5, further preferably 1.7, further preferably 1.9,

$$(4)\ (A+E)/T > 1,$$

where E represents a content, in parts by mass, of the bismaleimide compound based on 100 parts by mass of the rubber component.

**12.** The tire of any one of claims 1 to 11, wherein the water permeation-suppressing filler comprises at least one selected from the group consisting of kaolinite, dickite, nacrite, halloysite, chrysotile, lizardite, antigorite, pyrophyllite, talc, kerolite, williamsite, pimelite, minnesotaite, mica, chlorite, smectite, vermiculite, saponite, hectorite, stevensite, montmorillonite, beidellite, nontronite, boehmite, hydrotalcite, recovered carbon black, and a rubber powder.

**13.** The tire of any one of claims 1 to 12, wherein the metal cord comprises a steel cord having a plating layer of binary plating of copper and zinc, ternary plating of copper, zinc, and cobalt, or ternary plating of copper, zinc, and iron.

FIG. 1

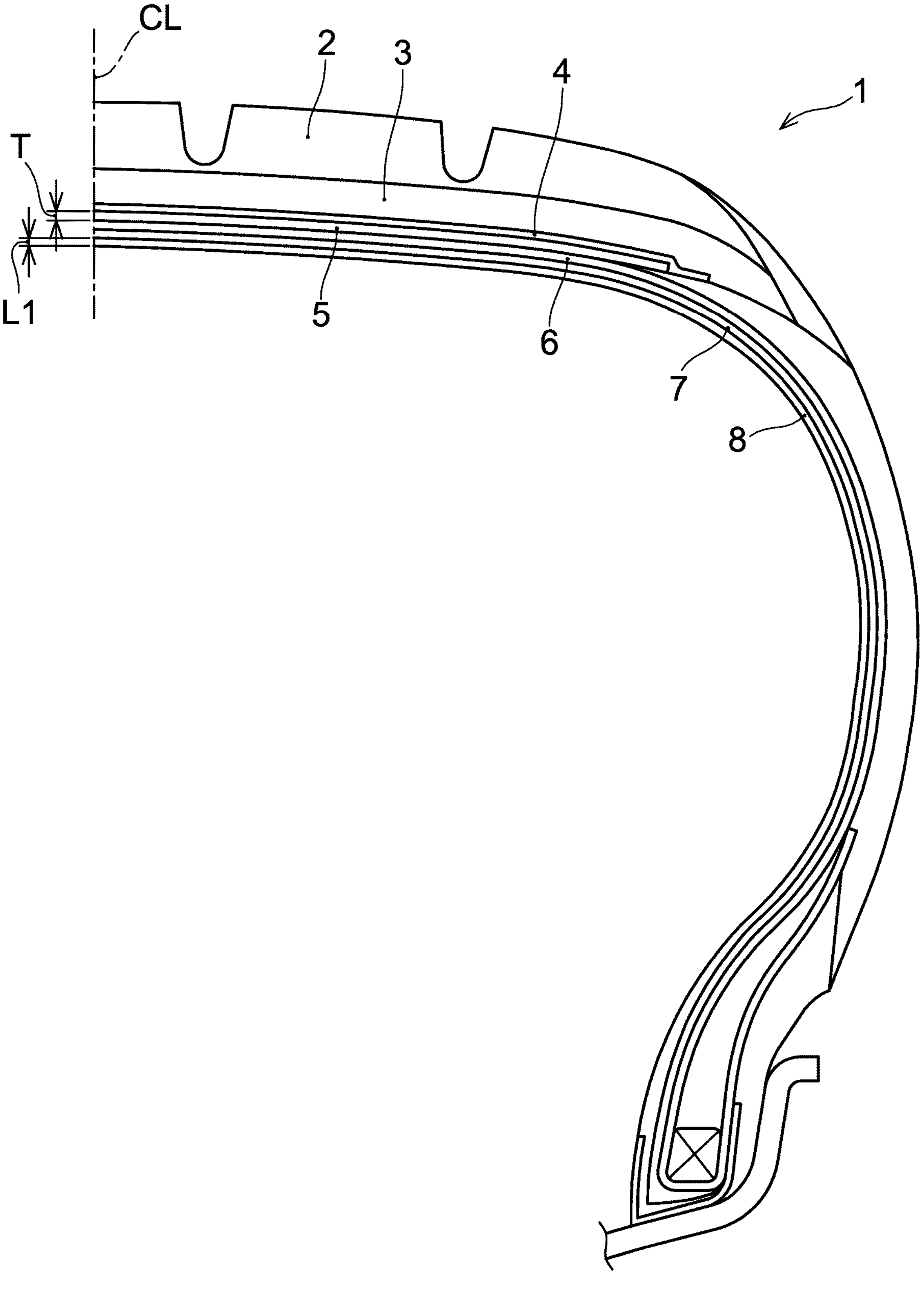

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2024128932 A
- EP 3427975 A
- JP 6856781 B
- EP 3173251 A
- JP 2009002594 A


### Non-patent literature cited in the description


- *Rubber Chemistry and Technology*, 2012, vol. 85 (3), 408-449
- A Comparison of Surface Morphology and Chemistry of Pyrolytic Carbon Blacks with Commercial Carbon Blacks. *Powder Technology*, 2005, vol. 160, 190-193
- *Akita Prefectural University Web Journal B*, 2019, vol. 6, 216-222